# FASCICULE DE BREVET EUROPEEN

(11) **EP 3 354 000 B1**
(45) Date de publication et mention de la délivrance du brevet: **06.11.2019**
(21) Numéro de dépôt: 16763790.9
(22) Date de dépôt: 09.09.2016
(51) Int. Cl.: H04L 29/12, H04L 29/06

(54) **EQUIPEMENT POUR OFFRIR DES SERVICES DE RÉSOLUTION DE NOMS DE DOMAINE**
VORRICHTUNG ZUR BEREITSTELLUNG VON DOMÄNENNAMENAUFLÖSUNGSDIENSTEN
DEVICE FOR PROVIDING DOMAIN NAMES RESOLUTION SERVICES

(30) Priorité: 22.09.2015 FR 1558926
(43) Date de publication de la demande: 01.08.2018
(73) Titulaire: Airbus Defence and Space SAS, 78130 Les Mureaux (FR)
(72) Inventeur: BONFANTI, Frédéric, 54200 Toul (FR); MONTENOT, Jean-Marc, 31130 Balma (FR); SCHOLLER, Franck, 78100 Saint Germain En Laye (FR)
(74) Mandataire: Cabinet Le Guen Maillet
(86) Numéro de dépôt international: PCT/EP2016/071259
(87) Numéro de publication internationale: WO 2017/050591

(56) Documents cités:
- US-A1- 2009 113 074
- US-A1- 2011 119 306
- Liang Zhu ET AL: "T-DNS: Connection-Oriented DNS to Improve Privacy and Security (extended)", , 30 juin 2014 (2014-06-30), XP055271598, Extrait de l'Internet: URL:https://www.isi.edu/~johnh/PAPERS/Zhu1 4b.pdf [extrait le 2016-05-10]

## Description

La présente invention concerne la résolution de noms de domaine et l'identification d'adresses IP (*Internet Protocol* en anglais, tel que défini dans le document normatif RFC 791) associées à des noms de domaine, tout en assurant que des restrictions d'accès auxdits noms de domaine et auxdites adresses IP sont respectées.

Dans le cadre d'architectures de services IP sécurises, une isolation des diverses couches de transport, filtrage, routage, résolution,... est aujourd'hui nécessaire pour permettre de garantir une étanchéité entre lesdits services lorsque ceux-ci s'appuient sur une même infrastructure physique de réseau de communication. L'implémentation de réseaux privés virtuels VPN (*Virtual Private Network* en anglais) au travers de mécanismes de type VRF (*Virtual Routing and Forwarding* en anglais) et de dispositifs pare-feu FW (*FireWall* en anglais) permet d'assurer cette étanchéité. Cette approche permet de réduire les coûts matériels, mais mène tout de même, d'un point de vue logique, à des infrastructures distinctes et disjointes. L'évolutivité, les coûts d'Opération et de Maintenance OaM (*Operations and Maintenance* en anglais) s'en ressentent d'autant. En outre, certaines couches de service, notamment la résolution de noms de domaine, ne peut pas bénéficier de la virtualisation mentionnée. En effet, les serveurs de résolution de noms de domaine, *e.g.* de type DNS (*Domain Name System* en anglais), ne sont pas adaptés pour supporter de la virtualisation, notamment logicielle, pas plus qu'ils ne permettent d'appliquer des règles de sécurité distinctives au niveau des utilisateurs et des ressources accessibles. En d'autres termes, la technologie de résolution de noms de domaine actuelle ne permet pas de discriminer les usagers d'une instance de service de résolution de noms de domaine, ni de choisir les ressources qui lui sont exposées et accessibles, sauf à déployer autant de serveurs de résolution de noms de domaine que d'infrastructures sécurisées distinctes. Il est connu le document de brevet US 2009/113074 A1 qui divulgue un service de résolution de noms de domaine comportant une phase d'authentification du dispositif effectuant la requête de résolution, suivie d'une phase d'autorisation. La résolution de nom de domaine est effectuée si l'utilisateur est authentifié et si l'utilisateur dispose effectivement des droits d'accès à ce nom de domaine. On retrouve aussi ces phases d'authentification et d'autorisation, en préalable à la résolution de nom de domaine dans le document de brevet US 2011/119306 A1.

Il est aussi connu le document «T-DNS : Connection-Oriented DNS to improve Privacy and Security», Liang Zhu et al., 2014, dans lequel une connexion sécurisée est utilisée pour communiquer avec un serveur de noms.

Il est souhaitable de pallier ces différents inconvénients de l'état de la technique.

Il est ainsi souhaitable de fournir à un groupe d'utilisateurs la possibilité de recourir de manière simple et flexible à des services de résolution de noms de domaine, et éventuellement de résolution inverse, tout en respectant des contraintes de sécurité distinctes selon les utilisateurs en fonction de domaines de sécurité au sein desquels lesdits utilisateurs ont respectivement le droit d'agir. Il est aussi souhaitable de permettre d'autoriser un ou plusieurs utilisateurs d'agir aisément au sein de plusieurs domaines de sécurité. Il est aussi souhaitable de permettre d'autoriser un ou plusieurs utilisateurs à n'accéder qu'à une sous-partie des ressources d'un ou plusieurs domaines de sécurité. Il est aussi souhaitable de fournir une solution qui vise à réduire la latence de traitement de requêtes de résolution de nom de domaine, et éventuellement de traitement de requêtes de résolution inverse. Il est notamment souhaitable de fournir une solution qui soit simple à mettre en œuvre et à faible coût.

L'invention concerne un équipement adapté pour offrir des services de résolution de noms de domaine, ledit équipement étant destiné à être connecté à un réseau de communication implémentant des domaines de sécurité, ledit équipement étant destiné à être déclaré comme serveur de noms de domaine auprès de dispositifs clients dans ledit réseau de communication. Ledit équipement inclut : une unité d'interface client adaptée pour recevoir des requêtes de résolution de nom de domaine en provenance desdits dispositifs clients et pour répondre auxdites requêtes, chaque requête de résolution de nom de domaine incluant une adresse IP du dispositif client ayant émis ladite requête et un nom de domaine à résoudre ; une unité d'authentification adaptée pour effectuer des premières opérations d'authentification vérifiant, pour chaque requête de résolution de nom de domaine, au moins grâce à l'adresse IP du dispositif client ayant émis ladite requête, si ledit dispositif client ayant émis ladite requête ou un utilisateur dudit dispositif client a été préalablement enregistré auprès dudit équipement ou d'un serveur d'authentification externe auquel ledit équipement est connecté ; une unité d'autorisation adaptée pour effectuer des premières opérations d'autorisation vérifiant, pour chaque requête de résolution d'un nom de domaine authentifiée par l'unité d'authentification, si le dispositif client ayant émis ladite requête ou l'utilisateur dudit dispositif client a effectivement droit d'accès aux ressources dudit nom de domaine ; une unité de résolution de noms de domaine adaptée pour effectuer des opérations de résolution de nom de domaine grâce à un cache dans lequel ledit équipement stocke des associations d'adresses IP et de noms de domaine respectifs, ledit cache étant peuplé grâce à des résultats de résolutions de noms de domaine effectuées par des serveurs de noms externes correspondant chacun à un desdits domaines de sécurité auxquels ledit équipement est destiné à être connecté via des tunnels sécurisés respectifs et auxquels ledit équipement fait appel, indépendamment desdits domaines de sécurité, lorsque ledit cache n'inclut pas de données permettant d'effectuer la résolution de nom de domaine requise. Ainsi, bien que les dispositifs client ou les utilisateurs desdits dispositifs clients doivent être confinés à des domaines de sécurité respectifs distincts, les services de résolution de noms de domaine peuvent être implémentés sur une plateforme commune garantissant l'étanchéité entre lesdits domaines de sécurité. De par la gestion d'une telle étanchéité grâce aux opérations d'authentification et d'autorisation, cette plateforme commune est aisément évolutive. Ajouter de nouveaux domaines de sécurité est ainsi aisément réalisé en mettant à jour les données d'autorisation pour les dispositifs clients ou utilisateurs concernés. De plus, bien que les échanges avec les serveurs de noms externes soient effectués via des tunnels sécurisés permettant d'assurer l'étanchéité entre les domaines de sécurité auxquels appartiennent lesdits serveurs de noms externes, ledit équipement fait appel auxdits serveurs de noms externes indépendamment desdits domaines de sécurité, ce qui renforce la simplicité de mise en œuvre dudit équipement lorsque de nouveaux domaines de sécurité sont à ajouter.

Selon un mode de réalisation particulier, l'unité d'interface client déclenche les opérations de résolution de nom de domaine en parallèle desdites premières opérations d'authentification et d'autorisation. Ainsi, la latence de traitement des requêtes de résolution de nom de domaine par ledit équipement est réduite.

Selon un mode de réalisation particulier, l'unité d'interface client effectue un filtrage des requêtes de résolution de nom de domaine reçues en vérifiant que chaque requête contient effectivement, en données utiles, une information de nom de domaine formatée comme attendu par ledit équipement. Ainsi, des tentatives malicieuses de tunnélisation peuvent être aisément évitées et des attaques de type *déni de service* ou *déni de service distribué* peuvent être aisément parées.

Selon un mode de réalisation particulier, l'unité d'interface client effectue un autre filtrage sur la base d'un historique d'usage des services dudit équipement par les dispositifs clients ayant respectivement émis lesdites requêtes de résolution de nom de domaine. Ainsi, la détection de comportement malicieux et la réaction à de tels comportements sont améliorées.

Selon un mode de réalisation particulier, l'unité d'authentification est en outre adaptée pour obtenir, dans chaque requête traitée par ladite unité d'authentification, des informations d'identification d'un utilisateur dont l'utilisation du dispositif client ayant émis ladite requête a entraîné l'émission de ladite requête, et lesdites premières opérations d'authentification vérifient en outre que lesdites informations d'identification correspondent à un utilisateur préalablement enregistré auprès dudit équipement ou du serveur d'authentification externe en association avec l'adresse IP dudit dispositif client. Ainsi, l'authentification est renforcée.

Selon un mode de réalisation particulier, l'unité d'autorisation dispose localement d'un référentiel de données au sein duquel l'unité d'autorisation vérifie, pour chaque requête de résolution d'un nom de domaine authentifiée par l'unité d'authentification, si le dispositif client ayant émis ladite requête ou l'utilisateur dudit dispositif client a effectivement droit d'accès aux ressources dudit nom de domaine, ledit référentiel de données étant peuplé grâce à des résultats d'autorisations effectuées par un serveur d'autorisation externe auquel ledit équipement est connecté et auquel ledit équipement fait appel lorsque ledit référentiel de données n'inclut pas de données permettant d'effectuer l'autorisation requise. Ainsi, la latence de traitement des requêtes de résolution de nom de domaine par ledit équipement est encore réduite.

Selon un mode de réalisation particulier, ledit référentiel de données définit, pour chaque utilisateur ou dispositif client préalablement enregistré, quels sont les noms de domaine dont les ressources sont accessibles audit utilisateur ou audit dispositif client. Ainsi, la latence de traitement des requêtes de résolution de nom de domaine par ledit équipement est encore réduite, grâce au fait que la structure dudit référentiel permet d'effectuer des recherches (et par conséquent des mises à jour) par identifiant d'utilisateur ou de dispositif client.

Selon un mode de réalisation particulier, l'unité d'authentification dispose localement d'un référentiel de données contenant des données d'authentification de dispositifs clients préalablement enregistrés et au sein duquel l'unité d'authentification vérifie, pour chaque requête de résolution d'un nom de domaine, si le dispositif client ayant émis ladite requête ou un utilisateur dont l'utilisation dudit dispositif client a entraîné l'émission de ladite requête a effectivement été préalablement enregistré, ledit référentiel de données étant peuplé grâce à des résultats d'authentifications effectuées par le serveur d'authentification externe et auquel ledit équipement fait appel lorsque ledit référentiel de données n'inclut pas de données permettant d'effectuer l'authentification requise. Ainsi, la latence de traitement des requêtes de résolution de nom de domaine par ledit équipement est encore réduite.

Selon un mode de réalisation particulier, l'unité de résolution de noms de domaine est adaptée pour, lorsque l'unité de résolution de noms de domaine fait appel aux serveurs de noms externes, demander en parallèle la résolution de nom de domaine auxdits serveurs de noms externes, et la première réponse positive valide reçue est utilisée pour peupler ledit cache. Ainsi, la latence de traitement des requêtes de résolution de nom de domaine par ledit équipement est encore réduite, et l'implémentation dudit équipement vis-à-vis des échanges avec lesdits serveurs de noms sont simples et flexibles vis-à-vis des différents domaines de sécurité dans le cadre des opérations de résolution de nom de domaine.

Selon un mode de réalisation particulier, ledit équipement est adapté pour, suite auxdites premières opérations d'authentification, déclarer le dispositif client ayant émis la requête de résolution de nom de domaine au sein du cache en y inscrivant l'adresse IP dudit dispositif client en association avec une autre représentation de ladite adresse IP sous une forme assimilable à un nom de domaine. Ledit équipement est en outre adapté pour offrir des services de résolution inverse, et pour ce faire : l'unité d'interface client est adaptée pour recevoir des requêtes de résolution inverse en provenance desdits dispositifs clients et pour répondre auxdites requêtes, chaque requête de résolution inverse incluant une adresse IP du dispositif client ayant émis ladite requête et une adresse IP à identifier ; l'unité d'authentification est adaptée pour effectuer des secondes opérations d'authentification vérifiant, pour chaque requête de résolution inverse, au moins grâce à l'adresse IP du dispositif client ayant émis ladite requête, si ledit dispositif client ou un utilisateur dudit dispositif client a été préalablement enregistré auprès dudit équipement ou dudit serveur d'authentification externe ; l'unité d'autorisation est adaptée pour effectuer des secondes opérations d'autorisation vérifiant, pour chaque requête de résolution inverse authentifiée par l'unité d'authentification, si le dispositif client ayant émis ladite requête ou l'utilisateur dudit dispositif a effectivement droit d'accès aux ressources concernées par ladite résolution inverse ; et l'unité de résolution de noms de domaine est adaptée pour effectuer des opérations de résolution inverse grâce au cache, en vérifiant si l'adresse IP à identifier est contenue dans ledit cache et en faisant appel aux serveurs de noms externes, indépendamment desdits domaines de sécurité, lorsque ledit cache n'inclut pas de données permettant d'effectuer la résolution inverse requise. Ainsi, bien que les dispositifs client ou les utilisateurs desdits dispositifs clients doivent être confinés à des domaines de sécurité respectifs distincts, les services de résolution inverse peuvent aussi être implémentés sur une plateforme commune garantissant l'étanchéité entre lesdits domaines de sécurité.

Selon un mode de réalisation particulier, l'unité d'interface client déclenche les opérations de résolution inverse en parallèle desdites secondes opérations d'authentification et d'autorisation. Ainsi, la latence de traitement des requêtes de résolution inverse par ledit équipement est réduite.

Selon un mode de réalisation particulier, l'unité de résolution de noms de domaine est adaptée pour, lorsque l'unité de résolution de noms de domaine fait appel aux serveurs de noms externes, demander en parallèle la résolution inverse auxdits serveurs de noms externes, et la première réponse positive valide reçue est utilisée pour peupler ledit cache. Ainsi, la latence de traitement des requêtes de résolution inverse par ledit équipement est encore réduite, et l'implémentation dudit équipement vis-à-vis des échanges avec lesdits serveurs de noms sont simples et flexibles vis-à-vis des différents domaines de sécurité dans le cadre des opérations de résolution inverse.

Selon un mode de réalisation particulier, ledit équipement est adapté pour, lorsque ledit équipement détecte la présence d'un dispositif client malicieux, fournir une adresse IP factice au dispositif client malicieux, en réponse à une requête de résolution de nom de domaine émise par ledit dispositif client malicieux. Cela permet d'observer les moyens de compromission d'un dispositif client suspecté être malicieux et de laisser plus de temps pour agir à l'encontre dudit dispositif client malicieux, sans exposer pour autant des ressources réseaux sensibles auquel le dispositif client malicieux souhaite accéder.

Selon un mode de réalisation particulier, ledit équipement est adapté pour, lorsque ledit équipement détecte la présence d'un dispositif client malicieux, transmettre à un contrôleur SDN une information indiquant que la présence d'un dispositif client malicieux a été détectée, ladite information incluant l'adresse IP dudit dispositif client malicieux, afin que le contrôleur SDN isole ledit dispositif client malicieux. Ainsi, le dispositif client malicieux ne peut plus solliciter ledit équipement.

Selon un mode de réalisation particulier alternatif, ledit équipement est adapté pour, lorsqu'un dispositif client est authentifié et autorisé à recevoir le résultat d'une résolution de nom de domaine suite aux opérations d'authentification et d'autorisation, transmettre à un contrôleur SDN une information indiquant que ledit dispositif client a obtenu l'autorisation de recevoir le résultat de la résolution de nom de domaine et qu'une adresse IP virtuelle est requise en remplacement de l'adresse IP qui correspond effectivement audit nom de domaine, afin que le contrôleur SDN attribue ladite adresse IP virtuelle et effectue un paramétrage de translation d'adresse auprès de routeurs de bordure du réseau de communication géré par le contrôleur SDN pour que ladite adresse IP virtuelle soit associée à l'adresse IP qui correspond effectivement audit nom de domaine. De plus, ledit équipement est adapté pour fournir ladite adresse IP virtuelle audit dispositif client à la place de l'adresse IP qui correspond effectivement audit nom de domaine. En utilisant des adresses IP virtuelles, il est aisé d'invalider l'accès à des ressources sensibles à un dispositif client qui s'avèrerait malicieux, puisque ledit dispositif client n'a pas eu connaissance de l'adresse IP réelle du nom de domaine en question.

Selon un mode de réalisation particulier, ledit équipement est adapté pour fournir des adresses IP virtuelles distinctes à des dispositifs clients distincts pour un même nom de domaine. Ainsi, il est possible d'invalider l'accès à des ressources sensibles à un dispositif client qui s'avèrerait malicieux, sans avoir à effectuer de reconfiguration vis-à-vis d'autres dispositifs clients ayant effectué des résolutions de nom de domaine pour ce même nom de domaine.

Selon un mode de réalisation particulier, ledit équipement comporte un cache complémentaire, et ledit équipement est adapté pour stocker dans le cache complémentaire ladite adresse IP virtuelle en association avec l'adresse IP réelle associée audit nom de domaine, en correspondance avec l'adresse IP du dispositif client qui a émis la requête de résolution de nom de domaine qui a entraîné l'attribution de ladite adresse IP virtuelle, afin de répondre à une future requête de résolution inverse vis-à-vis de ladite adresse IP virtuelle en sollicitant le cache complémentaire pour obtenir l'adresse IP réelle correspondant à ladite adresse IP virtuelle, tout en vérifiant que c'est cette adresse IP virtuelle qui avait été communiquée au dispositif client ayant émis ladite future requête de résolution inverse. Ainsi, il est possible d'effectuer une résolution inverse sur une adresse IP virtuelle sans avoir à recontacter le contrôleur SDN.

Selon un mode de réalisation particulier, ladite information transmise par ledit équipement au contrôleur SDN inclut également une durée, afin que le contrôleur SDN effectue des opérations d'annulation, auprès des routeurs de bordure du réseau de communication, du paramétrage de translation d'adresse lorsque ladite durée a expiré, et ce que ledit équipement est adapté pour supprimer du cache complémentaire les données relative à ladite adresse IP virtuelle lorsque ladite durée a expiré. Ainsi, au delà de cette durée, le dispositif client en question doit renouveler sa requête de résolution de nom de domaine pour continuer à accéder aux ressources du nom de domaine en question, et son accès aux ressources du nom de domaine en question peut être ainsi remis en cause facilement.

L'invention concerne également un procédé implémenté par un équipement pour offrir des services de résolution de noms de domaine, ledit équipement étant connecté à un réseau de communication implémentant des domaines de sécurité, ledit équipement étant déclaré comme serveur de noms de domaine auprès de dispositifs clients dans le réseau de communication. Ledit équipement effectue les étapes suivantes : recevoir des requêtes de résolution de nom de domaine en provenance desdits dispositifs clients et répondre auxdites requêtes, chaque requête de résolution de nom de domaine incluant une adresse IP du dispositif client ayant émis ladite requête et un nom de domaine à résoudre ; effectuer des opérations d'authentification vérifiant, pour chaque requête de résolution de nom de domaine, au moins grâce à l'adresse IP du dispositif client ayant émis ladite requête, si ledit dispositif client ou un utilisateur dudit dispositif client a été préalablement enregistré auprès dudit équipement ou d'un serveur d'authentification externe auquel ledit équipement est connecté ; effectuer des opérations d'autorisation vérifiant, pour chaque requête de résolution d'un nom de domaine authentifiée par l'unité d'authentification, si le dispositif client ayant émis ladite requête ou l'utilisateur dudit dispositif client a effectivement droit d'accès aux ressources dudit nom de domaine ; effectuer des opérations de résolution de nom de domaine grâce à un cache dans lequel ledit équipement stocke des associations d'adresses IP et de noms de domaine respectifs, ledit cache étant peuplé grâce à des résultats de résolutions de noms de domaine effectuées par des serveurs de noms externes correspondant chacun à un desdits domaines de sécurité auxquels ledit équipement est connecté via des tunnels sécurisés respectifs et auxquels ledit équipement fait appel, indépendamment desdits domaines de sécurité, lorsque ledit cache n'inclut pas de données permettant d'effectuer la résolution de nom de domaine requise.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par ledit processeur. L'invention concerne également des moyens de stockage sur lesquels est stocké un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication implémentant la présente invention ;
- la Fig. 2 illustre schématiquement un exemple d'architecture matérielle d'un équipement du système de communication de la Fig. 1 ;
- la Fig. 3 illustre schématiquement un algorithme, mis en œuvre par ledit équipement, pour effectuer une résolution de nom de domaine ;
- la Fig. 4 illustre schématiquement un algorithme, mis en œuvre par ledit équipement, pour effectuer une identification d'adresse IP, *i.e.* une résolution inverse ;
- la Fig. 5 illustre schématiquement un mode de réalisation particulier du système de communication ;
- la Fig. 6 illustre schématiquement un ensemble d'algorithmes, implémenté dans le cadre du système de la Fig. 5, de réaction à une détection de présence d'un dispositif client malicieux ; et
- la Fig. 7 illustre schématiquement un ensemble d'algorithmes, implémenté dans le cadre du système de la Fig. 5, d'attribution d'adresses IP virtuelles.

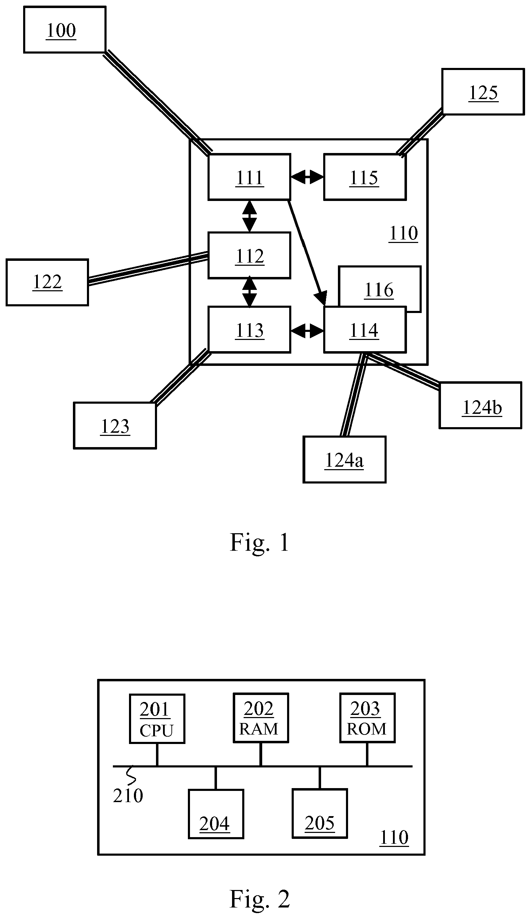

La **Fig. 1** illustre schématiquement un système de communication implémentant la présente invention. Le système de communication de la Fig. 1 comporte un équipement 110 adapté pour offrir des services de résolution de noms de domaine, et préférentiellement de résolution inverse, via un réseau de communication implémentant différents domaines de sécurité. L'équipement 110 est ainsi adapté pour fournir, en réponse à une requête de résolution de nom de domaine, une adresse IP correspondant à un nom de domaine inclus dans ladite requête. L'équipement 110 peut aussi être adapté pour fournir, en réponse à une requête d'identification d'une adresse IP incluse dans ladite requête (*i*.*e*. à une requête de résolution inverse), un nom de domaine associé ou dans le cas où ladite adresse IP correspond à un dispositif client, un identifiant dudit dispositif client par lequel ledit dispositif client a été préalablement enregistré dans le système de communication ou un identifiant d'un utilisateur dudit dispositif client, par lequel ledit utilisateur a été préalablement enregistré dans le système de communication.

L'équipement 110 est adapté pour recevoir des requêtes, par exemple des requêtes de type DNS, de la part de dispositifs clients (comme le dispositif client 100 sur la Fig. 1), pour effectuer des résolutions de noms de domaines. L'équipement 110 est adapté pour recevoir des requêtes, par exemple des requêtes de type DNS, de la part de dispositifs clients 100, pour effectuer des résolutions inverses. Pour ce faire, chaque dispositif client susceptible d'utiliser les services offerts par l'équipement 110 est préalablement configuré de sorte que l'adresse IP de l'équipement 110 est indiquée comme adresse IP de serveur à contacter pour les résolutions de noms de domaines et résolutions inverses. Ainsi, dans le cadre DNS, l'équipement 110 est déclaré comme serveur DNS auprès desdits dispositifs clients.

Les échanges entre l'équipement 110 et chaque dispositif client 100 sont préférentiellement effectués via un tunnel sécurisé, mais peuvent aussi être effectués en clair. Ces tunnels sécurisés ne sont pas utilisés pour implémenter les différents domaines de sécurités, mais pour simplement sécuriser les échanges entre les dispositifs clients indépendamment de chaque domaine de sécurité au sein duquel le dispositif client concerné a effectivement le droit d'agir, et simplifier le filtrage du trafic dans le système de communication. En effet, comme détaillé ci-après, l'étanchéité des domaines de sécurité est assurée grâce à des opérations d'autorisation.

Dans un mode de réalisation préféré, l'équipement 110 comporte une unité d'interface client 111, aussi appelée en anglais *Front-End Unit.* L'unité d'interface client 111 est en charge de recevoir les requêtes en provenance des dispositifs clients et de fournir d'éventuelles réponses auxdites requêtes. Comme détaillé par la suite, l'unité d'interface client 111 peut aussi être en charge d'effectuer un filtrage pour vérifier que la requête reçue est correctement formatée, et ce, afin notamment de parer à toute tentative de tunnélisation malicieuse, *e.g.* tunnélisation DNS (*DNS tunneling* en anglais), ou attaque de type *déni de service* DoS (*Deny of Service* en anglais) ou *déni de service distribué* DDoS (*Distributed Deny of Service* en anglais). L'unité d'interface client 111 est en charge de déclencher des opérations d'authentification des dispositifs clients ayant respectivement émis les requêtes reçues, et préférentiellement d'anticiper des opérations de résolution de nom de domaine et préférentiellement d'anticiper des opérations de résolution inverse. L'unité d'interface client 111 peut aussi être en charge de déclencher des opérations de mise à jour d'un fichier, ou d'une base de données, journal (*log* en anglais).

L'équipement 110 est donc adapté pour effectuer lesdites opérations d'authentification des dispositifs clients ayant respectivement émis les requêtes reçues. L'équipement 110 peut, pour ce faire, faire appel à un serveur d'authentification externe 122. Les échanges entre l'équipement 110 et le serveur d'authentification externe 122 sont préférentiellement effectués via un tunnel sécurisé, mais peuvent aussi être effectués en clair. Ce tunnel sécurisé est utilisé pour simplement sécuriser les échanges entre l'équipement 110 et le serveur d'authentification externe 122, indépendamment des domaines de sécurité du système de communication, et simplifier le filtrage du trafic dans le système de communication. Ces échanges sont par exemple conformes au protocole RADIUS (*Remote Authentication Dial-In User Service* en anglais, tel que défini dans les documents normatifs RFC 2865 et RFC 2866), ou au protocole Diameter (tel que défini dans le document normatif RFC 3588), ou au protocole TACACS+ (*Terminal Access Controller Access-Control System Plus* en anglais), ou au protocole LDAP *(Lightweight Directory Access Protocol* en anglais, tel que défini dans les documents normatifs RFC 1777 et RFC 2251). D'autres protocoles peuvent être utilisés, préférentiellement basés sur une architecture de type AAA (*Authentication, Authorization, Accounting* en anglais, soit *Authentification, Autorisation, Traçabilité* en français).

Dans le mode de réalisation préféré, l'équipement 110 comporte aussi une unité d'authentification 112 en charge d'effectuer lesdites opérations d'authentification. L'unité d'authentification 112 fait, dans ce cadre, appel localement à un référentiel de données de type CIDR (*Classless Inter-Domain Routing* en anglais) et/ou au serveur d'authentification externe 122. L'unité d'authentification 112 est aussi en charge de déclencher des opérations d'autorisation vis-à-vis des dispositifs clients ayant respectivement émis les requêtes reçues.

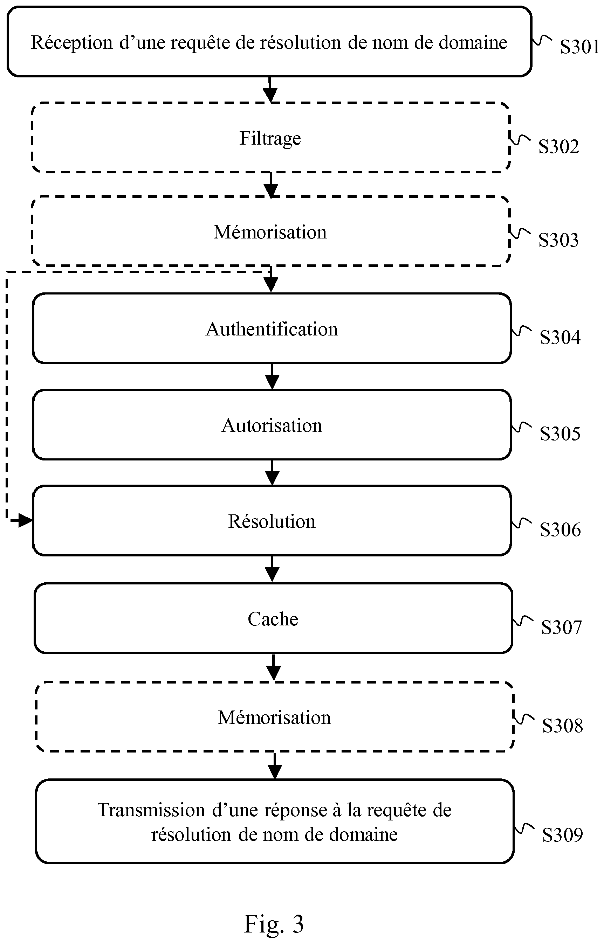

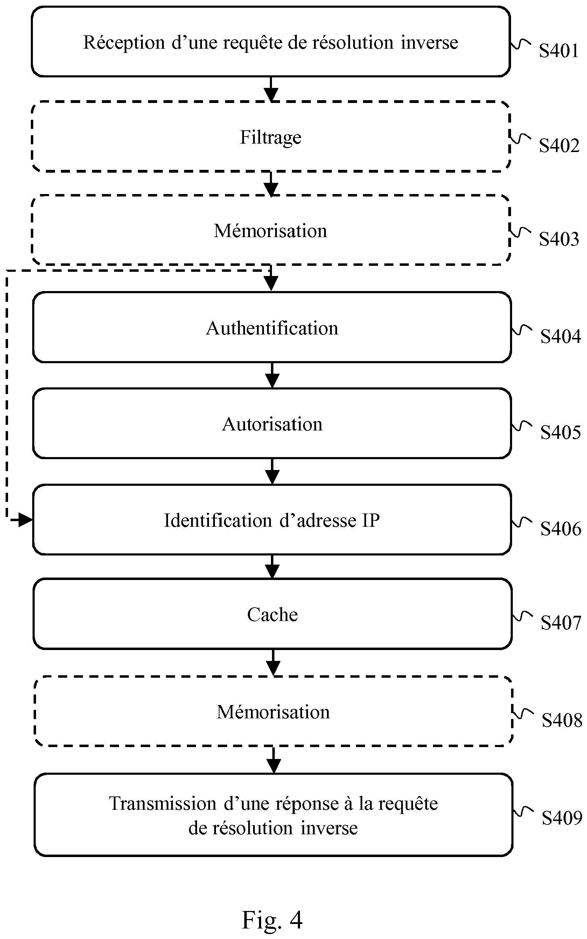

Le référentiel de données de type CIDR implémenté localement par l'équipement 110 est préférentiellement mis à jour grâce à des informations reçues en provenance du serveur d'authentification externe 122, lorsque ledit référentiel de données de type CIDR implémenté localement par l'équipement 110 ne contient pas les données d'authentification relatives au dispositif client, ou à l'utilisateur, pour le compte duquel une résolution de nom de domaine est requise. Cet aspect est détaillé ci-après en relation avec la Fig. 3. De plus, dans le cadre de résolutions inverses, le référentiel de données de type CIDR implémenté localement par l'équipement 110 est préférentiellement mis à jour grâce à des informations reçues en provenance du serveur d'authentification externe 122, lorsque ledit référentiel de données de type CIDR implémenté localement par l'équipement 110 ne contient pas les données d'authentification relatives au dispositif client, ou à l'utilisateur, pour le compte duquel une résolution inverse est requise. Cet aspect est détaillé ci-après en relation avec la Fig. 4.

Ce référentiel de données de type CIDR peut être implémenté au sein de l'équipement 110 sous la forme d'un fichier ou sous la forme d'une instance de base de données en mémoire. Dans un mode de réalisation préféré tel que décrit ci-après en relation avec la Fig. 3, ce référentiel de données de type CIDR est mis à jour grâce au serveur d'authentification externe 122. Les données d'authentification y sont alors préférentiellement stockées de manière temporaire, c'est-à-dire que lesdites données d'authentification y sont valides uniquement jusqu'à une prochaine réinitialisation de l'équipement 110 et y sont limitées aux résultats des dernières opérations d'authentification, le nombre de ces opérations et la taille de ce référentiel de données étant configurables.

L'équipement 110 est donc adapté pour effectuer lesdites opérations d'autorisation vis-à-vis des dispositifs clients ayant respectivement émis les requêtes reçues. Les opérations d'autorisation visent à assurer que le dispositif client 100, ou l'utilisateur dudit dispositif client 100, n'accède qu'aux ressource auxquelles ledit dispositif client 100 ou ledit utilisateur a effectivement droit d'accès. Ces opérations d'autorisation servent ainsi à vérifier, pour chaque requête de résolution d'un nom de domaine authentifiée par l'unité d'authentification, si le dispositif client ayant émis ladite requête, ou l'utilisateur dudit dispositif client, a effectivement droit d'accès aux ressources dudit nom de domaine. Cela permet notamment de définir qu'un même dispositif client peut accéder à des ressources de noms de domaine respectifs au sein d'un ou plusieurs domaines de sécurité, et, pour un même domaine de sécurité, que ledit dispositif client peut accéder à tout ou partie des ressources de noms de domaine respectifs au sein dudit domaine de sécurité. L'équipement 110 peut, pour ce faire, faire appel localement à un référentiel de données de type ACL (*Access Control List* en anglais) ou de type CUL (*Capability User List* en anglais) et/ou à un serveur d'autorisation externe 123, tel que décrit ci-après en relation avec la Fig. 3. Les échanges entre l'équipement 110 et le serveur d'autorisation externe 123 sont préférentiellement effectués via un tunnel sécurisé, mais peuvent aussi être effectués en clair. Ce tunnel sécurisé est utilisé pour simplement sécuriser les échanges entre l'équipement 110 et le serveur d'autorisation externe 123, indépendamment des domaines de sécurité du système de communication, et simplifier le filtrage du trafic dans le système de communication. Ces échanges sont par exemple conformes au protocole RADIUS, ou au protocole Diameter, ou au protocole TACACS+. D'autres protocoles peuvent être utilisés, préférentiellement basés sur une architecture de type AAA.

Le référentiel de données de type ACL définit, pour chaque nom de domaine géré par l'équipement 110, un ensemble d'utilisateurs ou de dispositifs clients qui sont autorisés à accéder aux ressources du nom de domaine. A partir du nom de domaine, il est alors possible d'obtenir la liste des utilisateurs ou dispositifs client autorisés à accéder aux ressources dudit nom de domaine, et alors de vérifier si tel ou tel utilisateur ou dispositif client y est autorisé. Il est aussi possible de définir, pour chaque nom de domaine géré par l'équipement 110, un ensemble d'utilisateurs ou de dispositifs clients qui ne sont pas autorisés à accéder aux ressources du nom de domaine. Il convient de noter que les droits d'accès peuvent être indiqués dans le référentiel de données de type ACL sous forme de règles. Par exemple, le référentiel de données de type ACL peut définir un ensemble d'utilisateurs ou de dispositifs clients qui sont autorisés à accéder aux ressources de tous les noms de domaines qui se terminent par *airbus.com.*

De plus, pour permettre d'effectuer des résolutions inverses, le référentiel de données de type ACL définit, pour chaque enregistrement de pointeur PTR (*PoinTer Record* en anglais) correspondant à une adresse IP pour laquelle au moins un dispositif client est susceptible de légitimement demander une résolution inverse, un ensemble d'utilisateurs ou de dispositifs clients qui sont effectivement autorisés à demander une résolution inverse sur la base de ladite adresse IP. Il est aussi possible de définir, pour chaque enregistrement de pointeur PTR géré par l'équipement 110, un ensemble d'utilisateurs ou de dispositifs clients qui ne sont pas autorisés à demander une résolution inverse sur la base de ladite adresse IP. Il convient de noter que les droits à demander une résolution inverse peuvent aussi être indiqués dans le référentiel de données de type ACL sous forme de règles. Par exemple, le référentiel de données de type ACL peut définir un ensemble d'utilisateurs ou de dispositifs clients qui sont autorisés à demander une résolution inverse pour toute adresse IP dont l'enregistrement de pointeur PTR est formaté comme suit : « *. **. 168.192. in-addr. arpa »,* où « * » indique que les digits correspondants ne sont pas pris en compte.

Le référentiel de données de type CUL définit, pour chaque utilisateur ou dispositif client préalablement enregistré, quels sont les noms de domaine dont les ressources sont accessibles audit utilisateur ou audit dispositif client. Un tel référentiel de données permet d'orienter les recherches sur les utilisateurs ou dispositifs clients, contrairement au référentiel de données de type ACL qui permet d'orienter les recherches sur les noms de domaines. A partir d'un identifiant d'un dispositif client (comme par exemple son adresse IP, son adresse MAC ou son nom de domaine) ou d'un identifiant d'un utilisateur dudit dispositif client, il est alors possible d'obtenir la liste des noms de domaine aux ressources desquels ledit utilisateur ou ledit dispositif client est autorisé à accéder, et alors de vérifier si ledit dispositif client ou ledit utilisateur est autorisé à accéder aux ressources de tel ou tel nom de domaine. Il est aussi possible de définir, pour chaque dispositif client ou chaque utilisateur préalablement enregistré auprès de l'équipement 110, un ensemble de noms de domaine aux ressources desquels ledit dispositif client ou ledit utilisateur n'est pas autorisé à accéder.

De plus, pour permettre d'effectuer des résolutions inverses, le référentiel de données de type CUL définit, pour chaque utilisateur ou dispositif client préalablement enregistré auprès de l'équipement 110, quels sont les enregistrements de pointeur PTR correspondant respectivement à des adresses IP pour lesquelles ledit dispositif client ou ledit utilisateur est en droit de demander une résolution inverse. Il est aussi possible de définir, pour chaque utilisateur ou dispositif client préalablement enregistré auprès de l'équipement 110, quels sont les enregistrements de pointeur PTR correspondant respectivement à des adresses IP pour lesquelles ledit dispositif client ou ledit utilisateur n'est pas en droit de demander une résolution inverse. Il convient de noter que, comme pour le référentiel de données de type ACL, les droits à demander une résolution inverse peuvent aussi être indiqués dans le référentiel de données de type CUL sous forme de règles.

Le référentiel de données type CUL est ainsi préférentiellement implémenté dans le cas où il est supposé exister plus de noms de domaine potentiellement accessibles que de dispositifs clients ou d'utilisateurs, et le référentiel de données de type ACL est ainsi préférentiellement implémenté dans le cas contraire. De par la structure desdits référentiels de données, les performances des opérations d'autorisation s'en trouvent accrues.

Le référentiel de données de type CUL ou de type ACL implémenté localement par l'équipement 110 est préférentiellement mis à jour grâce à des informations reçues en provenance du serveur d'autorisation externe 123, lorsque ledit référentiel de données de type CUL ou de type ACL implémenté localement par l'équipement 110 ne contient pas les données d'autorisation relatives au dispositif client, ou à l'utilisateur, pour le compte duquel une résolution de nom de domaine est requise. Cet aspect est détaillé ci-après en relation avec la Fig. 3. De plus, dans le cadre de résolutions inverses, le référentiel de données de type CUL ou de type ACL implémenté localement par l'équipement 110 est préférentiellement mis à jour grâce à des informations reçues en provenance du serveur d'autorisation externe 123, lorsque ledit référentiel de données de type CUL ou de type ACL implémenté localement par l'équipement 110 ne contient pas les données d'autorisation relatives au dispositif client, ou à l'utilisateur, pour le compte duquel une résolution inverse est requise. Cet aspect est détaillé ci-après en relation avec la Fig. 4.

Le référentiel de données de type ACL ou de type CUL peut être implémenté localement au sein de l'équipement 110 sous la forme d'un fichier ou sous la forme d'une instance de base de données en mémoire. Lorsque le référentiel de données de type ACL ou de type CUL est mis à jour grâce au serveur d'autorisation externe 123, les données d'autorisation y sont alors préférentiellement stockées de manière temporaire, c'est-à-dire que lesdites données d'autorisation y sont valides uniquement jusqu'à une prochaine réinitialisation de l'équipement 110 et y sont limitées aux résultats des dernières opérations d'autorisation, le nombre de ces opérations et la taille de ce référentiel de données étant configurables

Dans le mode de réalisation préféré, l'équipement 110 comporte aussi une unité d'autorisation 113 en charge d'effectuer lesdites opérations d'autorisation. L'unité d'autorisation 113 fait, dans ce cadre, appel localement au référentiel de données de type ACL ou de type CUL et/ou au serveur d'autorisation externe 123. L'unité d'autorisation 113 est aussi en charge de déclencher des opérations de résolution de noms de domaine, et préférentiellement de résolution inverse, telles que requises par les requêtes reçues.

L'équipement 110 est donc adapté pour effectuer lesdites opérations de résolution de noms de domaine et préférentiellement lesdites opérations de résolution inverse, telles que requises par les requêtes reçues. L'équipement 110 peut, pour ce faire, faire appel à un ou plusieurs serveurs de noms externes 124a, 124b. Les serveurs de noms externes 124a, 124b sont préférentiellement des serveurs DNS. Les échanges entre l'équipement 110 et chaque serveur de noms externe 124a, 124b sont donc préférentiellement conformes au protocole DNS. A chaque serveur de noms externe 124a, 124b correspond un des domaines de sécurité susmentionnés. Il peut y avoir plusieurs serveurs de noms externes par domaine de sécurité. Les échanges entre l'équipement 110 et chaque serveur de noms externe 124a, 124b sont alors effectués via un tunnel sécurisé permettant ainsi d'assurer l'étanchéité entre les différents domaines de sécurité au niveau des serveurs de noms externes 124a, 124b.

Dans le mode de réalisation préféré, l'équipement 110 comporte aussi une unité de résolution de noms de domaine 114 en charge d'effectuer lesdites opérations de résolution de noms de domaine et préférentiellement les opérations de résolution inverse. L'unité de résolution de noms de domaine 114 comporte un cache 116 servant à stocker, au moins temporairement, des associations entre noms de domaine et adresses IP correspondantes, obtenues grâce à des informations transmises par les serveurs de noms externes 124a, 124b. De plus, dans le cadre de résolutions inverses, l'équipement 110 mémorise, au sein du cache 116, des association entre adresses IP de dispositifs clients ayant sollicité les services de résolution de noms de domaine offerts par l'équipement 110 et une autre représentation de ladite adresse IP sous une forme assimilable à un nom de domaine, tel que décrit ci-après en relation avec les Figs. 3 et 4.

Lesdites associations sont préférentiellement stockées dans le cache 116 pendant une durée limitée prédéfinie, au delà de laquelle l'unité de résolution de noms de domaine 114 considère que lesdites données sont périmées et doivent être effacées du cache 116.

L'équipement 110 est préférentiellement adapté pour effectuer des opérations de mise à jour d'un fichier, ou d'une base de données, journal permettant de construire et mettre à jour un historique d'usage des services offerts par l'équipement 110. Ce fichier, ou cette base de données, journal peut être implémenté localement au sein de l'équipement 110. Ce fichier, ou cette base de données, journal peut être implémenté au sein d'un serveur de traçabilité externe 125. Les échanges entre l'équipement 110 et le serveur de traçabilité externe 125 sont effectués via un tunnel sécurisé. Ces échanges sont par exemple conformes au protocole RADIUS, ou au protocole Diameter, ou au protocole TACACS+. D'autres protocoles peuvent être utilisés, préférentiellement basés sur une architecture de type AAA.

Dans le mode de réalisation préféré, l'équipement 110 comporte aussi une unité de traçabilité 115 en charge d'effectuer lesdites opérations de mise à jour du fichier, ou de la base de données, journal. L'unité de traçabilité 115 est aussi en charge d'extraire des informations à partir du fichier, ou de la base de données, journal, sur demande de l'unité d'interface client 111.

Ces différents aspects sont détaillés par la suite en relation avec les Figs. 3 et 4 illustrant des comportements de l'équipement 110 sur réception, respectivement, de requêtes demandant d'effectuer des résolutions de noms de domaines et de requêtes demandant d'effectuer des résolutions inverses.

L'équipement 110 peut être implémenté sous la forme d'une unique machine ou d'un ensemble de plusieurs machines coopérant pour implémenter les unités mentionnées ci-dessus et/ou les comportements détaillés par la suite en relation avec les Figs. 3 et 4.

La structure de l'équipement 110, et son comportement tel que décrit ci-après, permettent d'assurer que chaque dispositif client, et ainsi chaque utilisateur, ne puisse accéder qu'aux ressources des noms de domaine restreints au(x) domaine(s) de sécurité au(x)quel(s) ledit dispositif client, et ledit utilisateur, ont droit d'accès. La structure de l'équipement 110, et son comportement tel que décrit ci-après, permettent ainsi de garantir la sécurité des accès auxdites ressources, tout en reposant sur une plateforme mutualisée.

La **Fig.2** illustre schématiquement un exemple d'architecture matérielle de l'équipement 110.

L'équipement 110 inclut alors, reliés par un bus de communication 210 : un processeur ou CPU (*Central Processing Unit* en anglais) 201 ; une mémoire vive RAM (*Random Access Memory* en anglais) 202 ; une mémoire morte ROM (*Read Only Memory* en anglais) 203 ; une unité de stockage 204 ou un lecteur de support de stockage, tel qu'un lecteur de cartes SD (*Secure Digital* en anglais) ou un disque dur HDD (*Hard Disk Drive* en anglais) ; et au moins une interface 205 permettant à l'équipement 110 de communiquer au sein d'au moins un réseau de communication.

Le processeur 201 est capable d'exécuter des instructions chargées dans la RAM 202 à partir de la ROM 203, ou d'une mémoire externe, ou d'un support de stockage, ou d'un réseau de communication. Lorsque l'équipement 110 est mis sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ci-après en relation avec l'équipement 110. Une approche similaire est applicable à tout ou partie des algorithmes et étapes décrits ci-après en relation avec un contrôleur SDN 500.

Tout ou partie des algorithmes et étapes décrits ci-après en relation avec les Figs. 3 et 4, et des unités de l'équipement 110 qui ont été précédemment décrites en relation avec la Fig. 1, peut ainsi être implémenté sous forme logicielle par exécution d'un ensemble d'instructions par une machine programmable, tel qu'un DSP (*Digital Signal Processor* en anglais) ou un microcontrôleur, ou être implémenté sous forme matérielle par une machine ou un composant dédié, tel qu'un FPGA (*Field-Programmable Gate Array* en anglais) ou un ASIC (*Application-Specific Integrated Circuit* en anglais). Une approche similaire est applicable à tout ou partie des algorithmes et étapes décrits ci-après en relation avec le contrôleur SDN 500.

La **Fig. 3** illustre schématiquement un algorithme, exécuté par l'équipement 110, pour effectuer une résolution d'un nom de domaine, c'est-à-dire retrouver l'adresse IP à laquelle est associé ledit nom de domaine.

Dans une étape S301, l'équipement 110 reçoit une requête de résolution de nom de domaine. Ladite requête inclut une information de nom de domaine, que le dispositif client 100 demande à résoudre. Ladite requête est préférentiellement conforme au protocole DNS, et l'information de nom de domaine est alors par exemple sous la forme *www.airbus.com.* Selon l'architecture modulaire présentée en relation avec la Fig. 1, l'étape S301 est effectuée par l'unité d'interface client 111.

Ladite requête peut inclure en outre des informations relatives à l'identité d'un utilisateur dont une utilisation du dispositif client 100 a entraîné l'émission de la requête reçue à l'étape S301. De telles informations relatives à l'identité de l'utilisateur sont, selon un premier exemple, un identifiant d'utilisateur *userID* et un mot de passe. De telles informations relatives à l'identité de l'utilisateur sont, selon un second exemple, une somme de contrôle supposée être obtenue par application prédéfinie d'une fonction de hachage, *e.g.* de type MD5 (*Message Digest 5* en anglais), sur une ou plusieurs informations d'identification de l'utilisateur. De telles informations relatives à l'identité de l'utilisateur sont, selon un troisième exemple, un jeton (*token* en anglais) dynamiquement modifié et partagé avec le système en charge de l'authentification dudit utilisateur (tel que le serveur d'authentification externe 122), comme la solution *SecureID* produite par la société RSA Security ; une telle solution repose alors sur un jeton composé de la juxtaposition d'un code affiché sur un écran d'un dispositif portable qu'un opérateur gérant le système en charge de l'authentification a préalablement fourni audit utilisateur et d'un code personnel de l'utilisateur qui est connu dudit système en charge de l'authentification, ledit dispositif portatif et ledit système en charge de l'authentification étant temporellement synchronisés de manière à ce que ledit système en charge de l'authentification connaisse à chaque instant quel code est supposé être affiché sur l'écran.

Dans une étape optionnelle S302 suivante, l'équipement 110 effectue un filtrage sur la requête reçue à l'étape S301. Le filtrage sert à vérifier que le format de la requête reçue à l'étape S301 est conforme au format attendu par l'équipement 110. Notamment, le filtrage sert à vérifier que la requête reçue à l'étape S301 contient effectivement, en données utiles, une information de nom de domaine et non une trame, *e.g.* de type TCP (*Transmission Control Protocol* en anglais, tel que défini dans le document normatif RFC 793), encodée en binaire. Cela permet à l'équipement 110 d'écarter rapidement des tentatives malicieuses de tunnélisation, *e.g*. tunnélisation DNS, qui viseraient à se servir de requêtes de résolution de nom de domaine pour permettre à des trames, *e.g.* de type TCP ou UDP (*User Datagram Protocol* en anglais, tel que défini dans le document normatif RFC 768), de sortir d'un domaine de sécurité au sein duquel lesdites trames sont supposées rester confinées. Si les données utiles de la requête reçue à l'étape S301 ne contiennent pas d'information de nom de domaine formatée comme attendu par l'équipement 110, l'équipement 110 rejette la requête reçue à l'étape S301.

Dans un mode de réalisation particulier, l'équipement 110 effectue un autre filtrage en fonction d'un historique d'usage, par le dispositif client 100, des services offerts par l'équipement 110. L'équipement 110 peut ainsi vérifier si le dispositif client 100 a été marqué comme potentiellement malicieux du fait d'avoir transmis de manière répétée des requêtes invalides à l'équipement 110. Si tel est le cas, l'équipement 110 rejette la requête reçue à l'étape S301. L'équipement 110 peut aussi vérifier si le dispositif client 100 a été marqué comme potentiellement malicieux du fait d'avoir transmis des requêtes à l'équipement 110 à une fréquence au-delà d'un seuil prédéfini représentatif d'un comportement n'ayant pour but que de saturer la bande passante de communication de l'équipement 110 et/ou de consommer inutilement des ressources de traitement (*processing resources* en anglais) au sein de l'équipement 110, comme c'est le cas pour des attaques de type *déni de service* DoS ou *déni de service distribué* DDoS.

Dans une étape optionnelle S303 suivante, l'équipement 110 mémorise une trace de la requête reçue à l'étape S301. Cela permet de construire ou de mettre à jour l'historique d'usage mentionné ci-dessus. Les traces des requêtes reçues sont préférentiellement mémorisées sous la forme d'un arbre de statistiques basé sur une structure de données incluant les adresses IP des dispositifs clients ayant respectivement émis lesdites requêtes, la fréquence de réception desdites requêtes, la conformité desdites requêtes par rapport au filtrage susmentionné. Ladite structure de données peut aussi inclure les informations de noms de domaine, si effectivement présentes, que lesdites requêtes ont demandé de résoudre. Ladite structure de données peut aussi inclure des informations de résultat de traitement desdites requêtes par l'équipement 110, comme détaillé par la suite, à savoir des informations indiquant si les résolutions de noms de domaine ou les résolutions inverses requises ont pu ou pas être effectuées. Un tel historique d'usage ne constitue pas un cache de données en tant que tel, mais plutôt un référentiel de métadonnées dont la taille et la durée de rétention dépendent d'une politique de gestion des ressources mémoire de l'équipement 110. Selon l'architecture modulaire présentée en relation avec la Fig. 1, l'historique d'usage est géré par l'unité de traçabilité 115, à laquelle l'unité d'interface client 111 fait appel pour examiner et mettre à jour ledit historique d'usage.

Lorsque l'équipement 110 effectue la mise à jour de l'historique d'usage suite à la réception de la requête à l'étape S301, l'équipement 110 analyse l'historique d'usage, pour ce qui concerne le dispositif client 100 ayant émis la requête à l'étape S301, de manière à déterminer si ledit dispositif client 100 doit être considéré comme potentiellement malicieux d'après son comportement vis-à-vis de l'équipement 110. Lorsque l'équipement 110 détecte que le dispositif client 100 doit être considéré comme potentiellement malicieux, l'équipement 110 met à jour l'historique d'usage de manière à marquer le dispositif client 100 comme potentiellement malicieux. Une classification peut être appliquée en fonction dudit comportement, *e.g.* « *origine interdite* », « *client suspect à servir en basse priorité* »,...

Selon l'architecture modulaire présentée en relation avec la Fig. 1, lorsque l'étape S301 est effectuée, et éventuellement l'une et/ou l'autre des étapes S302 et S303, l'unité d'interface client 111 déclenche l'activation d'opérations d'authentification auprès de l'unité d'authentification 112 et se met en attente du résultat de la suite du traitement de la requête reçue à l'étape S301. Dans un mode de réalisation particulier, l'unité d'interface client 111 déclenche en outre, de manière anticipée auprès de l'unité de résolution de noms de domaine 114, des opérations de résolution du nom de domaine inclus dans la requête reçue à l'étape S301.

Dans une étape S304 suivante, l'équipement 110 effectue des opérations d'authentification du dispositif client 100 ayant émis la requête reçue à l'étape S301. Les opérations d'authentification correspondent à une procédure qui consiste à vérifier l'identité du dispositif client 100 ou de l'utilisateur du dispositif client 100 avant d'éventuellement autoriser ledit dispositif client 100 à accéder à des ressources. Comme déjà mentionné, l'équipement 110 peut, pour ce faire, faire appel localement à un référentiel de données de type CIDR et/ou au serveur d'authentification externe 122, auprès duquel l'utilisateur du dispositif client 100 a préalablement été enregistré. Selon l'architecture modulaire présentée en relation avec la Fig. 1, l'étape S304 est effectuée par l'unité d'authentification 112.

Lorsque l'équipement 110 utilise localement un référentiel de données de type CIDR, ledit référentiel de données inclut au moins les adresses IP respectives de dispositifs clients qui ont été préalablement enregistrés auprès de l'équipement 110. L'équipement 110 parcourt alors ledit référentiel de données à la recherche de l'adresse IP du dispositif client 100 qui a émis la requête reçue à l'étape S301. L'équipement 110 est alors apte à déterminer si le dispositif client 100 qui a émis la requête reçue à l'étape S301 a été préalablement enregistré auprès de l'équipement 110. Dans un mode de réalisation particulier, l'équipement 110 extrait un identifiant du dispositif client 100 (comme par exemple le nom de domaine correspondant à l'adresse IP du dispositif client 100, l'adresse MAC (*Medium Access Control* en anglais) du dispositif client 100) ou de l'utilisateur dont une utilisation du dispositif client 100 a entraîné l'émission de la requête reçue à l'étape S301 (comme par exemple un identifiant d'utilisateur *userID* ou un identifiant IMSI (*International Mobile Subscriber Identity* en anglais) d'abonné à un service de radiotéléphonie via lequel l'utilisateur accède aux services offerts par l'équipement 110), selon l'enregistrement préalable effectué auprès de l'équipement 110. Cet identifiant sert alors de point d'entrée pour les opérations d'autorisation ultérieures, plus particulièrement dans le cas où les informations relatives à l'identité de l'utilisateur transmises dans la requête reçue à l'étape S301 ne le permettraient pas (ce qui dépend du contenu de la structure de données dans laquelle les informations nécessaires aux opérations d'autorisation sont stockées par le serveur d'autorisation externe 123 ou par l'équipement 110).

Lorsque l'équipement 110 fait appel au serveur d'authentification externe 122, l'équipement 110 fournit, au serveur d'authentification externe 122, l'adresse IP du dispositif client 100, telle qu'indiquée dans la requête reçue à l'étape S301. Le serveur d'authentification externe 122 effectue alors l'authentification du dispositif client 100 en vérifiant si l'adresse IP du dispositif client 100 a été préalablement enregistrée auprès du serveur d'authentification externe 122. Le serveur d'authentification externe 122 transmet alors à l'équipement 110 une information indiquant le résultat de l'authentification, et éventuellement un identifiant du dispositif client 100 (comme par exemple le nom de domaine correspondant à l'adresse IP du dispositif client 100, l'adresse MAC du dispositif client 100) ou de l'utilisateur dont une utilisation du dispositif client 100 a entraîné l'émission de la requête reçue à l'étape S301 (comme par exemple un identifiant d'utilisateur *userID* ou un identifiant IMSI d'abonné à un service de radiotéléphonie via lequel l'utilisateur accède aux services offerts par l'équipement 110), selon l'enregistrement préalable effectué auprès du serveur d'authentification externe 122. Cet identifiant sert alors de point d'entrée pour les opérations d'autorisation ultérieures, plus particulièrement dans le cas où les informations relatives à l'identité de l'utilisateur ne le permettent pas (ce qui dépend du contenu de la structure de données dans laquelle les informations nécessaires aux opérations d'autorisation sont stockées par le serveur d'autorisation externe 123 ou par l'équipement 110).

Dans un mode de réalisation préférentiel, l'équipement 110 vérifie d'abord si les informations nécessaires aux opérations d'authentification vis-à-vis du dispositif client, ou de l'utilisateur dudit dispositif client, sont localement disponibles dans le référentiel de données de type CIDR. Si tel est le cas, les opérations d'authentification sont effectuées en s'appuyant localement sur le référentiel de données de type CIDR ; sinon, l'équipement 110 fait appel au serveur d'authentification externe 122, ce qui permet de mettre à jour ledit référentiel de données de type CIDR vis-à-vis des données d'authentification du dispositif client, ou de l'utilisateur dudit dispositif client.

Comme déjà mentionné, la requête reçue à l'étape S301 peut inclure en outre des informations relatives à l'identité de l'utilisateur. Ces informations peuvent ainsi permettre de renforcer les opérations d'authentification. L'authentification peut ainsi être effectuée sur la base de l'adresse IP du dispositif client 100 et sur la base des informations relatives à l'identité de l'utilisateur. Lorsque lesdites informations relatives à l'identité de l'utilisateur sont, selon le premier exemple susmentionné, un identifiant d'utilisateur et un mot de passe, l'authentification consiste à vérifier que ledit identifiant d'utilisateur a été préalablement enregistré (dans le référentiel de données de type CIDR ou auprès du serveur d'authentification externe 122, selon le cas) en association avec ledit mot de passe, aussi en association avec l'adresse IP du dispositif client 100. Lorsque lesdites informations relatives à l'identité de l'utilisateur sont, selon le second exemple susmentionné, une somme de contrôle supposée être obtenue par application prédéfinie d'une fonction de hachage sur une ou plusieurs informations d'identification de l'utilisateur connues du serveur d'authentification externe 122, l'authentification consiste à vérifier que l'application de la fonction de hachage sur ladite ou lesdites informations d'identification de l'utilisateur (qui ont été stockées en association avec l'adresse IP du dispositif client 100) donne effectivement le même résultat que ladite somme de contrôle. Lorsque lesdites informations relatives à l'identité de l'utilisateur sont, selon le troisième exemple susmentionné, un jeton composé de la juxtaposition d'un code dynamique et d'un code personnel de l'utilisateur, l'authentification consiste à vérifier que ledit code dynamique est conforme à ce qui est attendu et que le code personnel (qui a été stocké en association avec l'adresse IP du dispositif client 100) correspond bien à celui dudit utilisateur d'après l'enregistrement préalable.

Lorsque l'authentification échoue, l'équipement 110 rejette la requête reçue de la part du dispositif client 100. Pour des raisons de simplification, cet aspect n'est pas représenté sur la Fig. 3. Selon l'architecture modulaire présentée en relation avec la Fig. 1, ce rejet est effectué par l'unité d'interface client 111 auprès du dispositif client 100, après avoir été informée de l'échec de l'authentification par l'unité d'authentification 112.

Selon l'architecture modulaire présentée en relation avec la Fig. 1, lorsque l'étape S304 est effectuée, l'unité d'authentification 112 déclenche l'activation d'opérations d'autorisation auprès de l'unité d'autorisation 113 et se met en attente du résultat de la suite du traitement de la requête reçue à l'étape S301.

Dans une étape S305 suivante, l'équipement 110 effectue les opérations d'autorisation vis-à-vis du dispositif client 100 ayant émis la requête reçue à l'étape S301, ou de l'utilisateur dont une utilisation du dispositif client 100 a entraîné l'émission de la requête reçue à l'étape S301, afin de vérifier si le dispositif client 100 ou ledit utilisateur est autorisé à accéder aux ressources du nom de domaine inclus dans la requête reçue à l'étape S301. Comme déjà mentionné, l'équipement 110 peut, pour ce faire, faire appel localement à un référentiel de données de type ACL ou CUL et/ou au serveur d'autorisation externe 123, auprès duquel le dispositif client 100 a préalablement été enregistré. Selon l'architecture modulaire présentée en relation avec la Fig. 1, l'étape S305 est effectuée par l'unité d'autorisation 113.

Lorsque l'équipement 110 utilise localement un référentiel de données de type ACL ou CUL, ledit référentiel de données inclut au moins les adresses IP respectives de dispositifs clients et/ou les identifiants respectifs de dispositifs clients ou d'utilisateurs, qui ont été préalablement enregistrés auprès de l'équipement 110, en association avec des droits d'accès aux ressources de noms de domaine accessibles via l'équipement 110. La correspondance entre adresse IP et identifiant peut être fournie par le référentiel de données de type CIDR susmentionné, ou par le serveur d'authentification externe 122, à l'issue des opérations d'authentification de l'étape S304. La correspondance entre adresse IP et identifiant peut aussi être fournie par le contenu de la requête reçue à l'étape S301 (e.g. la requête contient ladite adresse IP, un nom d'utilisateur qui peut servir de tel identifiant, ainsi qu'un mot de passe). L'équipement 110 parcourt alors ledit référentiel de données à la recherche de ladite adresse IP ou dudit identifiant. L'équipement 110 est alors apte à déterminer si le dispositif client 100, ou l'utilisateur, a effectivement droit d'accès aux ressources du nom de domaine précisé dans la requête reçue à l'étape S301.

Lorsque l'équipement 110 fait appel au serveur d'autorisation externe 123, l'équipement 110 fournit, au serveur d'autorisation externe 123, l'adresse IP du dispositif client 100, telle qu'indiquée dans la requête reçue à l'étape S301, ainsi que le nom de domaine précisé dans la requête reçue à l'étape S301. En variante, l'équipement 110 fournit, au serveur d'autorisation externe 123, l'identifiant du dispositif client 100 ou de l'utilisateur, tel qu'obtenu à l'issue des opérations d'authentification, ainsi que le nom de domaine précisé dans la requête reçue à l'étape S301. Le serveur d'autorisation externe 123 vérifie si le dispositif client 100 ou l'utilisateur a effectivement droit d'accès aux ressources du nom de domaine précisé dans la requête reçue à l'étape S301. Le serveur d'autorisation externe 123 transmet alors à l'équipement 110 une information indiquant le résultat de l'autorisation, *i.e.* de la vérification des droits d'accès effectifs vis-à-vis desdites ressources.

Dans un mode de réalisation préférentiel, l'équipement 110 vérifie d'abord si les informations nécessaires aux opérations d'autorisation vis-à-vis du dispositif client, ou de l'utilisateur dudit dispositif client, sont disponibles dans le référentiel de données de type CUL ou de type ACL. Si tel est le cas, les opérations d'autorisation sont effectuées en s'appuyant sur le référentiel de données de type CUL ou de type ACL ; sinon, l'équipement 110 fait appel au serveur d'autorisation externe 123, ce qui permet de mettre à jour ledit référentiel de données de type CUL ou de type ACL vis-à-vis des noms de domaine aux ressources desquels le dispositif client, ou de l'utilisateur dudit dispositif client, est autorisé (ou pas) à accéder. Un avantage significatif du référentiel de données de type CUL par rapport au référentiel de données de type ACL est que sa mise à jour en est simplifiée, plus particulièrement dans le cas où le serveur d'autorisation externe 123 est apte à retourner à l'équipement 110 l'ensemble des noms de domaine aux ressources desquels le dispositif client, ou de l'utilisateur dudit dispositif client, est autorisé (ou pas) à accéder, grâce au fait que le référentiel de données de type CUL permet d'orienter les recherches (et donc les mises à jour) sur les utilisateurs ou dispositifs client, contrairement au référentiel de données de type ACL qui permet d'orienter les recherches (et donc les mises à jour) sur les noms de domaines. Le serveur d'autorisation externe 123 implémente alors aussi préférentiellement un référentiel de données de type CUL, ou une structure de données équivalente, pour stocker les informations nécessaires aux opérations d'autorisation, afin de permettre au serveur d'autorisation externe 123 de répondre à l'équipement 110 dans un format de données calqué sur celui du référentiel de données effectivement utilisé localement par l'équipement 110.

Lorsque l'autorisation échoue, l'équipement 110 rejette la requête reçue de la part du dispositif client 100. Pour des raisons de simplification, cet aspect n'est pas représenté sur la Fig. 3. Selon l'architecture modulaire présentée en relation avec la Fig. 1, ce rejet est effectué par l'unité d'interface client 111 auprès du dispositif client 100, après avoir été informée de l'échec de l'autorisation par l'unité d'authentification 112 qui en a elle-même été informée par l'unité d'autorisation 113.

Selon l'architecture modulaire présentée en relation avec la Fig. 1, lorsque l'étape S305 est effectuée et que les opérations de résolution de nom de domaine avaient été déclenchées de manière anticipée par l'unité d'interface client 111 auprès de l'unité de résolution de noms de domaine 114, l'unité d'autorisation 113 confirme l'activation desdites opérations de résolution de nom de domaine, et se met en attente du résultat de la suite du traitement de la requête reçue à l'étape S301. Lorsque les opérations de résolution de nom de domaine n'avaient pas été déclenchées de manière anticipée, l'unité d'autorisation 113 déclenche l'activation des opérations de résolution de nom de domaine auprès de l'unité de résolution de noms de domaine 114, et se met en attente du résultat de la suite du traitement de la requête reçue à l'étape S301.

Il convient de noter que, dans le cas où l'étape S302 n'est pas effectuée, d'éventuelles requêtes malicieuses relatives à des tentatives de tunnélisation, *e.g*. tunnélisation DNS, sont écartées lors de l'étape S305, puisqu'en l'absence d'information de nom de domaine dans la requête reçue à l'étape S301, les opérations d'autorisation ne peuvent pas aboutir favorablement.

Dans une étape S306 suivante, lorsque l'équipement 110 a déclenché de manière anticipée les opérations de résolution de nom de domaine, l'équipement 110 termine les opérations de résolution du nom de domaine stipulé dans la requête reçue à l'étape S301. Lorsque les opérations de résolution de nom de domaine n'avaient pas été déclenchées de manière anticipée, l'équipement 110 effectue les opérations de résolution du nom de domaine stipulé dans la requête reçue à l'étape S301.

Dans le cadre des opérations de résolution de nom de domaine, l'équipement 110 vérifie s'il existe, au sein du cache 116, une association entre le nom de domaine stipulé dans la requête reçue à l'étape S301 et l'adresse IP correspondante. Si tel est le cas, l'équipement 110 est apte à répondre à la requête de résolution de nom de domaine émise par le dispositif client 100. Sinon, l'équipement 110 interroge au moins un serveur de noms externe 124a, 124b. Les interrogations auprès des serveurs de noms externes 124a, 124b sont préférentiellement effectuées en parallèle. Les interrogations auprès des serveurs de noms externes 124a, 124b sont effectuées indépendamment des domaines de sécurité auxquels lesdits serveurs de noms externes 124a, 124b appartiennent, l'étanchéité des domaines de sécurité étant assurée au niveau desdits serveurs de noms externes 124a, 124b grâce auxdits tunnels sécurisés et au niveau des dispositifs clients grâce aux opérations d'autorisation. Cela simplifie significativement l'implémentation de l'équipement 110 et augmente sa capacité à aisément accepter de nouveaux domaines de sécurité. Si les serveurs de noms externes 124a, 124b ne peuvent pas effectuer la résolution de nom de domaine demandée au vu des données dont ils disposent, lesdits serveurs de noms externes 124a, 124b peuvent faire suivre la demande de résolution de nom de domaine à un ou plusieurs autres serveurs de noms selon le principe de récursivité connu dans les systèmes de type DNS. Dès qu'une réponse positive valide est reçue d'un des serveurs de noms externes 124a, 124b, l'équipement 110 mémorise au sein du cache 116, dans une étape S307, une association entre ledit nom de domaine et l'adresse IP correspondante telle que précisée dans ladite réponse positive valide. Le cache 116 est ainsi peuplé grâce à des résultats de résolutions de noms de domaine effectuées par les serveurs de noms externes 124a, 124b auxquels l'équipement 110 fait appel, indépendamment desdits domaines de sécurité, lorsque ledit cache n'inclut pas de données permettant d'effectuer la résolution de nom de domaine requise. L'équipement 110 est alors apte à répondre à la requête de résolution de nom de domaine émise par le dispositif client 100. Si l'équipement 110 ne reçoit aucune réponse positive valide en provenance d'un des serveurs de noms externes 124a, 124b dans un laps de temps prédéfini, l'équipement 110 considère que la résolution de nom de domaine requise par le dispositif client 110 a échoué.

Le déclenchement anticipé des opérations de résolution de nom de domaine, c'est-à-dire sans attendre le résultat des opérations d'authentification et d'autorisation, permet un gain significatif de latence de traitement des requêtes de résolution de noms de domaine par l'équipement 110. Ainsi, l'association entre nom de domaine, tel que précisé dans la requête reçue à l'étape S301, et adresse IP correspondante peut déjà être obtenue au moment où les opérations d'autorisation prennent fin. Si ladite association entre ledit nom de domaine et l'adresse IP correspondante n'est pas encore obtenue, l'équipement 110 se met en attente d'une réponse positive valide en provenance d'un des serveurs de noms externes 124a, 124b jusqu'à expiration dudit laps de temps prédéfini susmentionné. Dans le cas où les opérations d'authentification ou d'autorisation échouent, le fait d'avoir déclenché de manière anticipée les opérations de résolution de nom de domaine permet de peupler au besoin le cache 116 (étape S307) et ainsi de réduire la latence d'une requête ultérieure de résolution portant sur le même nom de domaine.

Il convient de noter que, dans le cas où l'étape S302 n'est pas effectuée, d'éventuelles requêtes malicieuses relatives à des tentatives de tunnélisation, *e.g*. tunnélisation DNS, sont écartées lors des opérations de résolution de nom de domaine, puisqu'en l'absence d'information de nom de domaine dans la requête reçue à l'étape S301, les opérations de résolution de nom de domaine ne peuvent pas aboutir favorablement et la requête reçue à l'étape S301 n'est pas propagée vers les serveurs de noms externes 124a, 124b. Les éventuelles requêtes malicieuses relatives à des tentatives de tunnélisation, *e.g*. tunnélisation DNS, restent alors confinées dans l'équipement 110.

Selon l'architecture modulaire présentée en relation avec la Fig. 1, lorsque le résultat de la résolution de nom de domaine est obtenu, ledit résultat est propagé par l'unité de résolution de noms de domaine 114 à l'unité d'autorisation 113 qui le transmet à l'unité d'authentification 112 qui elle-même le transmet à l'unité d'interface client 111.

Lorsque la résolution de nom de domaine a échoué, l'équipement 110 rejette la requête reçue de la part du dispositif client 100. Pour des raisons de simplification, cet aspect n'est pas représenté sur la Fig. 3. Selon l'architecture modulaire présentée en relation avec la Fig. 1, ce rejet est effectué par l'unité d'interface client 111 auprès du dispositif client 100.

Dans une étape S308 optionnelle suivante, l'équipement 110 mémorise une information représentative du résultat du traitement de la requête reçue à l'étape S301, afin de mettre à jour l'historique d'usage déjà évoqué. Cette mémorisation peut être effectuée par le biais du serveur de traçabilité externe 125. Selon l'architecture modulaire présentée en relation avec la Fig. 1, cette mémorisation est effectuée par l'unité d'interface client 111 auprès de l'unité de traçabilité 115.

Dans une étape S309 suivante, l'équipement 110 transmet au dispositif client 110 une réponse à la requête reçue à l'étape S301, ladite réponse incluant l'adresse IP correspondant au nom de domaine qui avait été stipulé dans la requête reçue à l'étape S301. Selon l'architecture modulaire présentée en relation avec la Fig. 1, ladite réponse est transmise au dispositif client 100 par l'unité d'interface client 111.

Dans un mode de réalisation particulier, pour permettre d'implémenter l'algorithme de la Fig. 4 décrit ci-après, suite aux opérations d'authentification, l'équipement 110 déclare le dispositif client 100 au sein du cache 116. Pour ce faire, l'équipement 110 y inscrit l'adresse IP du dispositif client 100 (telle qu'indiquée dans la requête reçue à l'étape S301) en association avec une autre représentation de ladite adresse IP sous une forme assimilable à un nom de domaine, à savoir <*invIP*>*.in-addr.arpa*, où <*invIP*> est l'adresse IP du dispositif client 100 dont les octets sont exprimés en ordre inverse. Comme détaillé par la suite en relation avec la Fig. 4, cela permet à l'équipement 100 de répondre à des requêtes de résolution inverse concernant des adresses IP de dispositifs clients considérés comme actifs dans le système de communication puisqu'ayant pris contact avec l'équipement 110 pour effectuer une résolution de nom de domaine. Par exemple, une application de sécurité détecte une activité de type DoS au niveau d'un serveur dans un des domaines de sécurité susmentionnés et souhaite identifier quelle est l'origine (au-delà de l'adresse IP) de ces attaques. Selon un autre exemple, un serveur souhaite identifier, pour des raisons de traçabilité, quelle est l'origine (au-delà de l'adresse IP) d'une ou plusieurs requêtes qui lui sont adressées.

La **Fig.4** illustre schématiquement un algorithme, mis en œuvre par l'équipement 110, pour effectuer une identification d'adresse IP, c'est-à-dire effectuer une résolution inverse.

Dans une étape S401, l'équipement 110 reçoit une requête d'identification d'adresse IP. Ladite requête inclut donc, outre l'adresse IP du dispositif client 100 ayant émis ladite requête, une adresse IP à identifier. Ladite requête est préférentiellement conforme au protocole DNS (résolution DNS inverse), et l'adresse IP à identifier est alors sous la forme <*invIP*>*.in-addr.arpa* déjà mentionée. Selon l'architecture modulaire présentée en relation avec la Fig. 1, l'étape S401 est effectuée par l'unité d'interface client 111.

Ladite requête peut inclure en outre des informations relatives à l'identité d'un utilisateur dont une utilisation du dispositif client 100 a entraîné l'émission de la requête reçue à l'étape S401. Les différentes variantes d'informations relatives à l'identité dudit utilisateur sont identiques à celles déjà présentées en relation avec l'étape S301.

Dans une étape optionnelle S402 suivante, l'équipement 110 effectue un filtrage sur la requête reçue à l'étape S401. Le filtrage sert à vérifier que le format de la requête reçue à l'étape S401 est conforme au format attendu par l'équipement 110. Notamment, le filtrage sert à vérifier que la requête reçue à l'étape S401 contient effectivement, en données utiles, une information d'adresse IP à identifier et non une trame, *e.g.* de type TCP, encodée en binaire. Cela permet à l'équipement 110 d'écarter rapidement des tentatives malicieuses de tunnélisation, tel que déjà présenté en relation avec l'étape S302.

Dans un mode de réalisation particulier, l'équipement 110 effectue un autre filtrage en fonction de l'historique d'usage, par le dispositif client 100, des services offerts par l'équipement 110, tel que déjà présenté en relation avec l'étape S302.

Dans une étape optionnelle S403 suivante, l'équipement 110 mémorise une trace de la requête reçue à l'étape S401. Cela permet de construire ou de mettre à jour ledit historique d'usage, tel que déjà présenté en relation avec l'étape S303.

Lorsque l'équipement 110 effectue la mise à jour de l'historique d'usage suite à la réception de la requête à l'étape S401, l'équipement 110 analyse l'historique d'usage, pour ce qui concerne le dispositif client 100 ayant émis la requête à l'étape S401, de manière à déterminer si ledit dispositif client 100 doit être considéré comme potentiellement malicieux d'après son comportement vis-à-vis de l'équipement 110. L'équipement 110 réagit à cet historique d'usage de la même manière que déjà présenté en relation avec l'étape S303.

Selon l'architecture modulaire présentée en relation avec la Fig. 1, lorsque l'étape S401 est effectuée, et éventuellement l'une et/ou l'autre des étapes S402 et S403, l'unité d'interface client 111 déclenche l'activation d'opérations d'authentification auprès de l'unité d'authentification 112 et se met en attente du résultat de la suite du traitement de la requête reçue à l'étape S401. Dans un mode de réalisation particulier, l'unité d'interface client 111 déclenche en outre, de manière anticipée auprès de l'unité de résolution de noms de domaine 114, des opérations de résolution inverse.

Dans une étape S404 suivante, l'équipement 110 effectue les opérations d'authentification du dispositif client 100 ayant émis la requête reçue à l'étape S401. Ces opérations d'authentification correspondent à une procédure qui consiste à vérifier l'identité du dispositif client 100, ou de l'utilisateur, avant d'éventuellement répondre à la requête d'identification d'adresse IP. Ces opérations d'authentification se déroulent tel que déjà présenté en relation avec l'étape S304, y compris en ce qui concerne le traitement d'éventuelles informations relatives à l'identité de l'utilisateur qui seraient incluses dans la requête reçue à l'étape S401, ainsi qu'en ce qui concerne la mise à jour du référentiel de données de type CIDR grâce aux données d'authentification fournies par le serveur d'authentification externe 122. Selon l'architecture modulaire présentée en relation avec la Fig. 1, l'étape S404 est effectuée par l'unité d'authentification 112.

Lorsque l'authentification échoue, l'équipement 110 rejette la requête reçue de la part du dispositif client 100. L'équipement 110 ne procède donc pas à l'identification de l'adresse IP requise par le dispositif client 100. Pour des raisons de simplification, cet aspect n'est pas représenté sur la Fig. 4. Selon l'architecture modulaire présentée en relation avec la Fig. 1, ce rejet est effectué par l'unité d'interface client 111 auprès du dispositif client 100, après avoir été informée de l'échec de l'authentification par l'unité d'authentification 112.

Dans un mode de réalisation particulier, l'équipement 110 obtient, suite aux opérations d'authentification, un identifiant du dispositif client 100, ou de l'utilisateur dont une utilisation du dispositif client 100 a entraîné l'émission de la requête reçue à l'étape S401, tel que déjà décrit en relation avec la Fig. 3. Cet identifiant sert alors de point d'entrée pour les opérations d'autorisation ultérieures, plus particulièrement dans le cas où les informations relatives à l'identité de l'utilisateur transmises dans la requête reçue à l'étape S401 ne le permettraient pas (ce qui dépend du contenu de la structure de données dans laquelle les informations nécessaires aux opérations d'autorisation sont stockées par le serveur d'autorisation externe 123 ou par l'équipement 110).

Ainsi, selon l'architecture modulaire présentée en relation avec la Fig. 1, lorsque l'étape S404 est effectuée, l'unité d'authentification 112 déclenche l'activation d'opérations d'autorisation auprès de l'unité d'autorisation 113 et se met en attente du résultat de la suite du traitement de la requête reçue à l'étape S401.

Dans une étape S405 suivante, l'équipement 110 effectue des opérations d'autorisation du dispositif client 100, ou de l'utilisateur dont une utilisation du dispositif client 100 a entraîné l'émission de la requête reçue à l'étape S401, afin de vérifier si le dispositif client 100 ou ledit utilisateur est autorisé à accéder aux ressources concernées par l'adresse IP à identifier, *i.e.* les ressources du nom de domaine associé à l'adresse IP à identifier. Comme déjà mentionné, l'équipement 110 peut, pour ce faire, faire appel localement à un référentiel de données de type ACL ou de type CUL et/ou au serveur d'autorisation externe 123. Selon l'architecture modulaire présentée en relation avec la Fig. 1, l'étape S405 est effectuée par l'unité d'autorisation 113. Comme dans le cadre de l'algorithme de la Fig. 3, l'équipement 110 met préférentiellement à jour le référentiel de données de type ACL ou CUL grâce aux données d'autorisation reçues en provenance du serveur d'autorisation externe 123.

Lorsque l'équipement 110 utilise un référentiel de données de type ACL ou CUL, ledit référentiel de données inclut au moins les adresses IP respectives de dispositifs clients et/ou les identifiants respectifs de dispositifs clients ou d'utilisateurs, qui ont été préalablement enregistrés auprès de l'équipement 110, en association avec des adresses IP pour lesquelles lesdits dispositifs clients ou utilisateurs sont effectivement autorisés à demander une résolution inverse. L'équipement 110 parcourt alors ledit référentiel de données à la recherche de l'adresse IP du dispositif client 100, ou de l'identifiant dudit dispositif client 100 ou dudit utilisateur. L'équipement 110 est alors apte à déterminer si le dispositif client 100 ou ledit utilisateur a effectivement droit de requérir la résolution inverse sur la base de l'adresse IP stipulée dans la requête reçue à l'étape S401.

Lorsque l'équipement 110 fait appel au serveur d'autorisation externe 123, l'équipement 110 fournit, au serveur d'autorisation externe 123, l'adresse IP du dispositif client 100, ou l'identifiant dudit dispositif client 100 ou dudit utilisateur, ainsi que l'adresse IP à identifier. Le serveur d'autorisation externe 123 vérifie si le dispositif client 100, ou ledit utilisateur, a effectivement droit de requérir la résolution inverse sur la base de l'adresse IP stipulée dans la requête reçue à l'étape S401. Le serveur d'authentification externe 122 transmet alors à l'équipement 110 une information indiquant le résultat de l'autorisation, *i.e*. de la vérification des droits d'accès effectifs vis-à-vis de ladite résolution inverse.

Lorsque l'autorisation échoue, l'équipement 110 rejette la requête reçue de la part du dispositif client 100. Pour des raisons de simplification, cet aspect n'est pas représenté sur la Fig. 4. Selon l'architecture modulaire présentée en relation avec la Fig. 1, ce rejet est effectué par l'unité d'interface client 111 auprès du dispositif client 100, après avoir été informée de l'échec de l'autorisation par l'unité d'authentification 112 qui en a elle-même été informée par l'unité d'autorisation 113.

Selon l'architecture modulaire présentée en relation avec la Fig. 1, lorsque l'étape S405 est effectuée et que les opérations de résolution inverse avaient été déclenchées de manière anticipée par l'unité d'interface client 111 auprès de l'unité de résolution de noms de domaine 114, l'unité d'autorisation 113 confirme l'activation desdites opérations de résolution de nom de domaine, et se met en attente du résultat de la suite du traitement de la requête reçue à l'étape S401. Lorsque les opérations de résolution inverse n'avaient pas été déclenchées de manière anticipée, l'unité d'autorisation 113 déclenche l'activation des opérations de résolution inverse auprès de l'unité de résolution de noms de domaine 114, et se met en attente du résultat de la suite du traitement de la requête reçue à l'étape S401.

Dans une étape S406 suivante, lorsque l'équipement 110 a déclenché de manière anticipée les opérations de résolution inverse, l'équipement 110 termine les opérations de résolution inverse au regard de la requête reçue à l'étape S401. Lorsque les opérations de résolution inverse n'avaient pas été déclenchées de manière anticipée, l'équipement 110 effectue les opérations de résolution inverse au regard de la requête reçue à l'étape S401.

Dans le cadre des opérations d'identification d'adresse IP, l'équipement 110 vérifie s'il existe, au sein du cache 116, une association entre l'adresse IP à identifier et une autre représentation de ladite adresse IP sous une forme assimilable à un nom de domaine, à savoir <*invIP*>.*in-addr.arpa,* où <*invIP*> est l'adresse IP à identifier dont les octets sont exprimés en ordre inverse. Si tel est le cas, cela signifie que l'adresse IP correspond à un dispositif client qui a précédemment requis les services de l'équipement 110 et que l'équipement 110 est apte à répondre à la requête d'identification d'adresse IP émise par le dispositif client 100. Sinon, l'équipement 110 vérifie s'il existe, au sein du cache 116, une association entre l'adresse IP à identifier et un nom de domaine, qui résulterait d'une demande précédente de résolution de nom de domaine qui concernait le nom de domaine associé à l'adresse IP à identifier. Si tel est le cas, l'équipement 110 est apte à répondre à la requête d'identification d'adresse IP émise par le dispositif client 100. Sinon, l'équipement 110 interroge au moins un serveur de noms externe 124a, 124b. Les interrogations auprès des serveurs de noms externes 124a, 124b sont préférentiellement effectuées en parallèle. Les interrogations auprès des serveurs de noms externes 124a, 124b sont effectuées indépendamment des domaines de sécurité auxquels lesdits serveurs de noms externes 124a, 124b appartiennent, l'étanchéité des domaines de sécurité étant assurée au niveau desdits serveurs de noms externes 124a, 124b grâce auxdits tunnels sécurisés et au niveau des dispositifs clients grâce aux opérations d'autorisation. Cela simplifie significativement l'implémentation de l'équipement 110 et augmente sa capacité à aisément accepter de nouveaux domaines de sécurité. Si les serveurs de noms externes 124a, 124b ne peuvent pas effectuer la résolution inverse demandée au vu des données dont ils disposent, lesdits serveurs de noms externes 124a, 124b peuvent faire suivre la demande de résolution de nom de domaine à un ou plusieurs autres serveurs de noms selon le principe de récursivité connu dans les systèmes de type DNS. Dès qu'une réponse positive valide est reçue d'un des serveurs de noms externes 124a, 124b, l'équipement 110 mémorise au sein du cache 116, dans une étape S407, une association entre ledit nom de domaine et l'adresse IP correspondante telle que précisée dans ladite réponse positive valide. L'équipement 110 est alors apte à répondre à la requête de résolution inverse émise par le dispositif client 100. Si l'équipement 110 ne reçoit aucune réponse positive valide en provenance d'un des serveurs de noms externes 124a, 124b dans un laps de temps prédéfini, l'équipement 110 considère que la résolution inverse requise par le dispositif client 110 a échoué. Cette situation peut survenir si la résolution inverse concerne une adresse IP d'un dispositif client qui n'a pas précédemment requis les services de l'équipement 110 et qui est dans un domaine de sécurité en dehors des domaines gérés par les serveurs de noms externes 124a, 124b.

Le déclenchement anticipé des opérations de résolution inverse, c'est-à-dire sans attendre le résultat des opérations d'authentification et d'autorisation, permet un gain significatif de latence de traitement des requêtes de résolution inverse par l'équipement 110. Ainsi, le résultat de la résolution inverse peut déjà être obtenu au moment où les opérations d'autorisation prennent fin. Si le résultat de la résolution inverse n'est pas encore obtenue, l'équipement 110 se met en attente d'une réponse positive valide en provenance d'un des serveurs de noms externes 124a, 124b jusqu'à expiration dudit laps de temps prédéfini susmentionné. Dans le cas où les opérations d'authentification ou d'autorisation échouent, le fait d'avoir déclencher de manière anticipée les opérations de résolution inverse permet de peupler au besoin le cache 116 (étape S407) et ainsi de réduire la latence d'une requête ultérieure de résolution inverse portant sur la même adresse IP.

Selon l'architecture modulaire présentée en relation avec la Fig. 1, lorsque le résultat de la résolution inverse est obtenu, ledit résultat est propagé par l'unité de résolution de noms de domaine 114 à l'unité d'autorisation 113 qui le transmet à l'unité d'authentification 112 qui elle-même le transmet à l'unité d'interface client 111.

Lorsque l'identification d'adresse IP a échoué, l'équipement 110 rejette la requête reçue de la part du dispositif client 100. Pour des raisons de simplification, cet aspect n'est pas représenté sur la Fig. 4. Selon l'architecture modulaire présentée en relation avec la Fig. 1, le résultat de l'identification de l'adresse IP qui a été fournie dans la requête reçue à l'étape S401 est fourni par l'unité d'interface client 111 auprès du dispositif client 100 après en avoir été informé par l'unité d'authentification 112.

Dans une étape S408 optionnelle suivante, l'équipement 110 mémorise une information représentative du résultat du traitement de la requête reçue à l'étape S401, afin de mettre à jour l'historique d'usage déjà évoqué. Cette mémorisation peut être effectuée par le biais du serveur de traçabilité externe 125. Selon l'architecture modulaire présentée en relation avec la Fig. 1, cette mémorisation est effectuée par l'unité d'interface client 111 auprès de l'unité de traçabilité 115.

Dans une étape S409 suivante, l'équipement 110 transmet au dispositif client 110 une réponse à la requête reçue à l'étape S401, ladite réponse incluant le nom de domaine correspondant à l'adresse IP qui était à identifier, telle que stipulée dans la requête reçue à l'étape S401. Selon l'architecture modulaire présentée en relation avec la Fig. 1, ladite réponse est transmise au dispositif client 100 par l'unité d'interface client 111.

L'architecture de la solution présentée ici repose sur un enchainement d'unités de traitements les unes à la suite des autres, chaque unité activant la prochaine en séquence conformément à algorithme de résolution de nom de domaine présenté dans la Fig. 3. Un mode particulier de réalisation consiste à maintenir une certaine indépendance entre les unités de traitement et les activer à partir d'un contrôleur qui en gère le séquencement, ce contrôleur pouvant être implémenté au niveau de l'unité d'interface client 111 ou dans un module dédié.

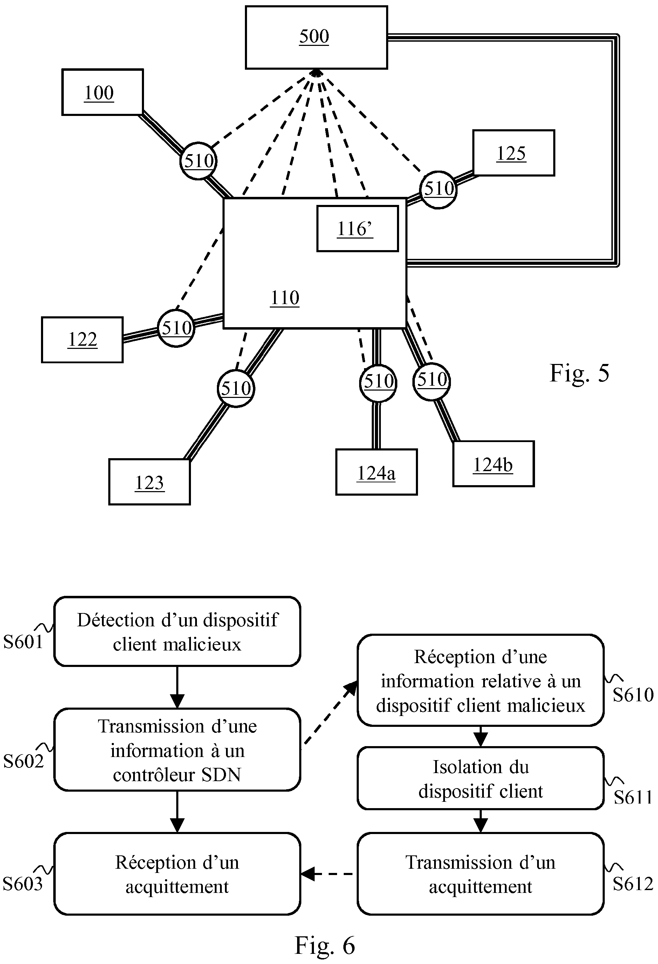

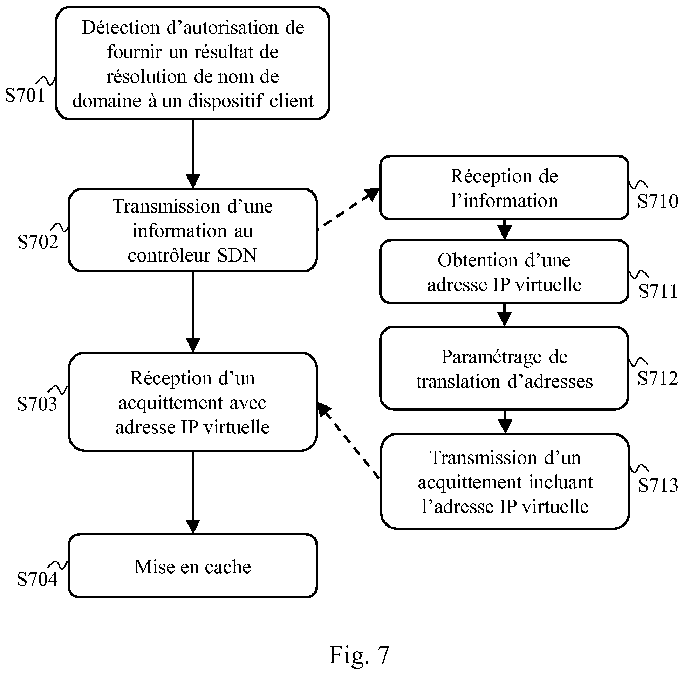

La **Fig. 5** illustre schématiquement un autre système de communication, relatif à au moins un mode de réalisation particulier de la présente invention. Le schéma de la Fig. 5 reprend les éléments du schéma de la Fig. 1, auxquels est ajouté le contrôleur SDN 500 (déjà mentionné en relation avec la Fig. 2) et en faisant apparaître un ensemble de routeurs 510 permettant d'interconnecter l'équipement 110 aux dispositifs clients et aux différents serveurs 122, 123, 124, 125. De plus, la Fig. 5 fait apparaître un cache complémentaire 116' utilisé dans le cadre d'une gestion d'affectation d'adresses IP virtuelles tel que décrit ci-après en relation avec la Fig. 7.

L'équipement 110 est adapté pour communiquer avec le contrôleur SDN 500, préférentiellement via un tunnel sécurisé. Des échanges entre l'équipement 110 et le contrôleur SDN 500 sont détaillés ci-après en relation avec les Figs. 6 et 7, dans des modes de réalisation particuliers de l'invention.

Le contrôleur SDN 500 est un équipement, implémenté sur une machine ou plusieurs machines coopérant ensemble, assurant le contrôle du réseau de communication via lequel les différents éléments représentés sur la Fig. 5 communiquent entre eux. Les architectures de type SDN permettent typiquement de découpler le contrôle du réseau de communication et le transport des données au sein du réseau de communication. Le contrôle du réseau de communication étant alors centralisé, apportant ainsi une certaine forme d'abstraction vis-à-vis de l'infrastructure réseau elle-même, il est aisé d'en faire évoluer les fonctionnalités et règles automatiques d'administration, notamment par mise à jour logicielle. En effet, dans les infrastructures réseau qui ne sont pas type SDN, le contrôle du réseau de communication est distribué parmi les équipements réseau assurant le transport des données, rendant alors les fonctionnalités de contrôle et règles d'administration globalement statiques et difficiles à faire évoluer. Dans le cadre d'une architecture de type SDN, le contrôleur SDN configure dynamiquement les équipements réseaux, tels que les routeurs 510, en utilisant par exemple le protocole OpenFlow de l'ONF (*Open Networking Foundation* en anglais).

Comme décrit précédemment en relation avec la Fig. 3, l'équipement 110 peut détecter la présence d'un dispositif client qui, par exemple, cherche à utiliser les services offerts par l'équipement 110 pour tenter d'effectuer de la tunnelisation malicieuse, *e.g*. tunnélisation DNS. L'équipement 110 peut alors rapporter la détection d'un tel dispositif client malicieux auprès du contrôleur SDN 500, comme décrit ci-après en relation avec la Fig. 6, de manière à appliquer une contremesure visant à isoler ledit dispositif client de l'équipement 110 et ainsi améliorer les performances, l'intégrité et la sécurité du réseau de communication.

Le contrôleur SDN 500 peut aussi permettre, grâce à une capacité à attribuer dynamiquement des adresses IP virtuelles au sein du réseau de communication, de masquer la véritable adresse IP relative au nom de domaine fournie à un dispositif client en réponse à une requête de résolution de nom de domaine, et d'améliorer ainsi la sécurité du réseau de communication. Cet aspect est détaillé ci-après en relation avec la Fig. 7.

La **Fig. 6** illustre ainsi schématiquement un ensemble d'algorithmes, implémenté dans le cadre du système de la Fig. 5, de réaction à une détection de présence d'un dispositif client malicieux.

Dans une étape S601, l'équipement 110 détecte la présence d'un dispositif client malicieux, tel que précédemment décrit en relation avec la Fig. 3.

Dans une étape S602, l'équipement 110 transmet au contrôleur SDN 500 une information indiquant que la présence d'un dispositif client malicieux a été détectée, ladite information incluant l'adresse IP dudit dispositif client malicieux.

Cette information, transmise par l'équipement 110 à l'étape S602, est reçue par le contrôleur SDN 500 dans une étape S610.

Ensuite, le contrôleur SDN 500 effectue une étape S611 dans laquelle le contrôleur SDN 500 configure au moins un équipement du réseau de communication de manière à isoler ledit dispositif client malicieux de l'équipement 110.

Dans un premier mode de réalisation, le contrôleur SDN 500 informe le plan de contrôle du réseau de communication de sorte que les routeurs 510 soient configurés pour interdire tout trafic issu de l'adresse IP du dispositif client malicieux telle que fournie par l'équipement 110. Les routeurs 510 ont alors instruction de jeter (« drop » en anglais) tout paquet ayant l'adresse IP du dispositif client malicieux comme adresse IP source. Une alternative consiste pour le contrôleur SDN 500 à envoyer une instruction à un ou plusieurs équipements réseau, tel que des routeurs ou des commutateurs (« switch » en anglais), directement connectés au dispositif client malicieux de fermer chaque port Ethernet sur lequel ledit dispositif client malicieux est directement connecté (il est concevable que le dispositif client malicieux dispose de plusieurs interfaces Ethernet et que ledit dispositif client malicieux soit alors connecté à plusieurs interfaces Ethernet dudit équipement réseau ou à plusieurs équipements réseau).

Dans un second mode de réalisation, lorsque le dispositif client malicieux n'appartient pas au réseau de communication (ou partie de réseau de communication) dont le contrôleur SDN 500 a la charge, le contrôleur SDN 500 avertit un autre contrôleur SDN en charge du réseau de communication (ou de la partie de réseau de communication) où est situé le dispositif client malicieux, pour que cet autre contrôleur SDN puisse éventuellement prendre les mesures adaptées pour isoler ledit dispositif client malicieux. Les contrôleurs SDN disposent alors de règles d'interconnexion définissant quel contrôleur SDN est en charge de quel réseau de communication (ou partie de réseau de communication).

Dans un troisième mode de réalisation, l'équipement 110 fournit une adresse IP factice au dispositif client malicieux, en réponse à une requête de résolution de nom de domaine émise par ledit dispositif client malicieux, de manière à rediriger tout ou partie des communications dudit dispositif client vis-à-vis dudit nom de domaine vers cette adresse IP factice. L'adresse IP factice fournie par l'équipement 110 peut avoir été configurée au préalable dans l'équipement 110 ou être obtenue auprès d'un dispositif complémentaire du réseau de communication. Cette approche permet d'observer les moyens de compromission d'un dispositif client suspecté être malicieux et de laisser plus de temps pour agir à l'encontre dudit dispositif client malicieux, sans exposer pour autant les ressources réseaux sensibles auquel le dispositif client malicieux souhaite accéder. Ce troisième mode de réalisation peut être implémenté par l'équipement 110 sans avoir recours au contrôleur SDN 500 (en s'appuyant simplement sur le schéma de la Fig. 1). La présence du contrôleur SDN 500 permet toutefois, lorsque suffisamment de données ont été recueillies pour confirmer que le comportement dudit dispositif client est malicieux, d'implémenter le premier mode de réalisation susmentionné, pour interdire tout trafic issu de l'adresse IP du dispositif client malicieux.

Dans une étape S612 suivante, le contrôleur SDN 500 envoie un acquittement à l'équipement 110 afin d'informer l'équipement 110 que l'information, indiquant que la présence du dispositif client malicieux a été détectée, a été traitée.

Cet acquittement, transmis par le contrôleur SDN 500 à l'étape S612, est reçu par l'équipement 110 dans une étape S603.

Selon l'architecture modulaire présentée en relation avec la Fig. 1, les étapes S601, S602 et S603 sont effectuées par l'unité d'interface client 111.

La **Fig. 7** illustre schématiquement un ensemble d'algorithmes, implémenté dans le cadre du système de la Fig. 5, d'attribution d'adresses IP virtuelles.

Dans une étape S701, l'équipement 110 détecte que, suite aux opérations d'authentification et d'autorisation réalisées dans le cadre de l'algorithme de la Fig. 3, qu'un dispositif client 100 est authentifié et autorisé à recevoir le résultat d'une résolution de nom de domaine pour laquelle ledit dispositif client 100 a transmis une requête à l'équipement 110.

Dans une étape S702 suivante, l'équipement 110 transmet au contrôleur SDN 500 une information indiquant que ledit dispositif client 100 a obtenu l'autorisation de recevoir le résultat de la résolution de nom de domaine requise par ledit dispositif client et, par conséquent qu'une adresse IP virtuelle est requise en remplacement de l'adresse IP qui correspond effectivement audit nom de domaine. Ladite information inclut au moins l'adresse IP correspondant au nom de domaine ayant fait l'objet de la résolution. Ladite information peut en outre comprendre l'adresse IP du dispositif client 100 en question et/ou le nom de domaine concerné.

Cette information, transmise par l'équipement 110 à l'étape S702, est reçue par le contrôleur SDN 500 dans une étape S710.

Ensuite, le contrôleur SDN 500 effectue une étape S711 dans laquelle le contrôleur SDN 500 obtient une adresse IP virtuelle, c'est-à-dire une adresse IP inutilisée dans le plan d'adressage du réseau de communication géré par le contrôleur SDN 500. Cette adresse IP virtuelle est ainsi destinée à être attribuée au nom de domaine ayant fait l'objet de la résolution, du point de vue du dispositif client 100 en question. Le contrôleur SDN 500 garde trace de l'association entre l'adresse IP correspondant au nom de domaine en question et l'adresse IP virtuelle. Le contrôleur SDN 500 peut aussi garder trace en correspondance de l'adresse IP du dispositif client 100 en question. A noter donc que si plusieurs clients font des demandes de résolution de nom de domaine pour un même nom de domaine, une adresse IP virtuelle différente est fournie à chacun d'entre eux, ce qui permet, comme détaillé ci-après, de refuser ultérieurement l'accès aux ressources dudit nom de domaine à un dispositif client qui s'avérerait malicieux sans pour autant empêcher les autres dispositifs clients de continuer à accéder aux ressources dudit nom de domaine. Il est, en variante, possible d'attribuer une même adresse IP virtuelle à un nom de domaine quel que soit le dispositif client à l'origine de la requête de résolution de nom de domaine. Cependant, l'implémentation de cette approche est plus complexe pour refuser ultérieurement l'accès aux ressources dudit nom de domaine à un dispositif client qui s'avèrerait malicieux, car il serait nécessaire d'invalider l'adresse IP virtuelle et d'affecter une nouvelle adresse IP virtuelle audit nom de domaine, et informer les autres dispositifs clients de cette nouvelle adresse IP virtuelle pour leur permettre de continuer à accéder aux ressources dudit nom de domaine.

Dans une étape S712 suivante, le contrôleur SDN 500 effectue un paramétrage de translation d'adresse auprès des routeurs de bordure du réseau de communication géré par le contrôleur SDN 500, de sorte que ladite adresse IP virtuelle soit associée à ladite adresse IP qui correspond effectivement audit nom de domaine. Le contrôleur SDN 500 dispose d'une vue d'ensemble du réseau de communication et de sa topologie, par exemple grâce à un protocole de routage à état de liens (« link-state routing protocol » en anglais) tel que OSPF (« Open Shortest Path First » en anglais), ce qui lui permet d'identifier quels sont lesdits routeurs de bordure dudit réseau de communication. Ainsi, l'adresse IP virtuelle permet de masquer au dispositif client 100 ayant fait la demande de résolution de nom de domaine l'adresse IP réelle du nom de domaine demandé et ainsi améliorer la sécurité vis-à-vis des ressources du nom de domaine auquel le dispositif client 100 souhaite accéder suite à la résolution de nom de domaine que ledit dispositif client 100 a demandée.

Dans une étape S713 suivante, le contrôleur SDN 500 envoie un acquittement à l'équipement 110 afin d'informer l'équipement 110 quelle adresse IP virtuelle a été attribuée à l'étape S711 pour masquer le nom de domaine vis-à-vis du dispositif client 100 en question. Cet acquittement, transmis par le contrôleur SDN 500 à l'étape S713, est reçu par l'équipement 110 dans une étape S703.

Dans une étape S704 suivante, l'équipement 110 extrait l'adresse IP virtuelle contenue dans l'acquittement et stocke, dans le cache complémentaire 116', ladite adresse IP virtuelle en association avec l'adresse IP réelle associée au dit nom de domaine, en correspondance avec l'adresse IP du dispositif client 100 qui a émis la requête de résolution de nom de domaine qui a entraîné l'attribution de ladite adresse IP virtuelle. L'équipement 110 retourne alors au dispositif client 100 qui a émis la requête reçue à l'étape S301 ladite adresse IP virtuelle à la place de l'adresse IP qui correspond effectivement audit nom de domaine. Le stockage dans le cache complémentaire 116' de données relatives à l'adresse IP virtuelle permet à l'équipement 110 de répondre à de futures requêtes de résolution inverse vis-à-vis de l'adresse IP virtuelle attribuée audit nom de domaine pour le dispositif client 100 en question, en sollicitant le cache complémentaire 116' pour obtenir l'adresse IP réelle correspondant à l'adresse IP virtuelle, tout en vérifiant que c'est cette adresse IP virtuelle qui avait été communiquée au dispositif client 100 ayant émis la requête de résolution inverse, puis en sollicitant le cache 116 pour retrouver le nom de domaine correspondant à l'adresse IP réelle fournie par le cache complémentaire 116'. Cela évite d'avoir à solliciter le contrôleur SDN 500 en cas de résolution inverse vis-à-vis de ladite adresse IP virtuelle.

Dans une variante de réalisation de l'étape S704, l'équipement 110 stocke aussi, dans le cache complémentaire 116', le nom de domaine concerné en correspondance avec ladite adresse IP virtuelle. Ce stockage dans le cache complémentaire 116' permet à l'équipement 110 de répondre à de futures requêtes de résolution inverse vis-à-vis de ladite adresse IP virtuelle sans avoir à recourir au cache 116, l'ensemble des informations nécessaires à la résolution inverse étant alors incluses dans le cache complémentaire 116', ce qui permet une meilleure réactivité de l'équipement 110 pour effectuer la résolution inverse.

A noter que l'équipement 110 peut interroger le cache 116 en premier lieu en s'appuyant sur l'adresse IP virtuelle, et comme le cache 116 n'a pas de données correspondant à l'adresse IP en question (qui est virtuelle), l'équipement 110 peut alors se tourner vers le cache complémentaire 116' pour identifier si cette adresse IP est effectivement une adresse IP virtuelle qui a été communiquée audit dispositif client, et pour ainsi poursuivre les opérations de résolution inverse. Cette approche est plus simple à intégrer au sein des opérations de résolution inverse de l'algorithme de la Fig. 4.

Selon l'architecture modulaire présentée en relation avec la Fig. 1, les étapes S701, S702, S703 et S704 sont effectuées par l'unité de résolution de noms de domaine 114.

Dans un mode particulier de réalisation, dans l'étape S702, ladite information transmise par l'équipement 110 au contrôleur SDN 500 inclut également une durée au-delà de laquelle l'adresse IP virtuelle est considérée obsolète. Selon ce mode de réalisation, dans l'étape S703, le contrôleur SDN démarre une temporisation de durée égale à la durée fournie par l'équipement 110 dans l'étape S702, simultanément au paramétrage de translation d'adresses IP de l'étape S712. A l'expiration de cette temporisation, le contrôleur SDN 500 effectue des opérations d'annulation, auprès des routeurs de bordure du réseau de communication, du paramétrage de translation d'adresse effectué à l'étape S712. Le contrôleur SDN 500 peut envoyer une information auprès de l'équipement 110 indiquant l'expiration de cette temporisation et l'annulation du paramétrage de translation d'adresse. Cette information inclue au moins l'adresse IP virtuelle en question, et éventuellement l'adresse IP correspondant réellement au nom de domaine concerné, et aussi éventuellement l'adresse IP du dispositif client 100 ayant émis la demande de résolution de domaine. A la réception de cette information, l'équipement 110 supprime du cache complémentaire 116' les données relatives à ladite adresse IP virtuelle (y compris donc les données qui lui sont associées). En variante, l'équipement 110 peut gérer de son côté, en parallèle du contrôleur SDN 500, une même temporisation, pour supprimer du cache complémentaire 116' les données relatives à ladite adresse IP virtuelle, sans que le contrôleur SDN 500 n'ait à lui demander. Ainsi, au delà de cette temporisation, le dispositif client 100 doit renouveler sa requête de résolution de nom de domaine pour continuer à accéder aux ressources du nom de domaine en question. Son accès aux ressources du nom de domaine en question peut être ainsi remis en cause facilement, en interdisant l'accès auxdites ressources pour ledit dispositif client 100 lors des opérations d'autorisation détaillées en relation avec la Fig. 3. Cela permet aussi de gérer facilement les ressources mémoire nécessaires à l'implémentation du cache complémentaire 116'.

Plutôt que d'attendre l'expiration de la temporisation lorsque le dispositif client concerné est détecté comme malicieux, il est possible de l'empêcher de continuer à accéder aux ressources du nom de domaine concerné. En effet, en s'appuyant sur le principe des échanges et traitements déjà évoqués en relation avec la Fig. 6, l'équipement 110 en informe le contrôleur SDN 500 qui, dans l'étape S611, isole le dispositif client 100 en question en annulant le paramétrage de translation d'adresse effectué à l'étape S712 pour le dispositif client 100 en question vis-à-vis du nom de domaine concerné.

## Revendications

1. Equipement (110) adapté pour offrir des services de résolution de noms de domaine, ledit équipement étant destiné à être connecté à un réseau de communication implémentant des domaines de sécurité, ledit équipement étant destiné à être déclaré comme serveur de noms de domaine auprès de dispositifs clients (100) dans ledit réseau de communication,
ledit équipement incluant une unité d'interface client (111) adaptée pour recevoir (S301) des requêtes de résolution de nom de domaine en provenance desdits dispositifs clients et pour répondre (S309) auxdites requêtes, chaque requête de résolution de nom de domaine incluant une adresse IP du dispositif client ayant émis ladite requête et un nom de domaine à résoudre ;
ledit équipement incluant en outre :
- une unité d'authentification (112) adaptée pour effectuer (S304) des premières opérations d'authentification vérifiant, pour chaque requête de résolution de nom de domaine, au moins grâce à l'adresse IP du dispositif client ayant émis ladite requête, si ledit dispositif client ou un utilisateur dudit dispositif client a été préalablement enregistré auprès dudit équipement ou d'un serveur d'authentification externe auquel ledit équipement est connecté ;
- une unité d'autorisation (113) adaptée pour effectuer (S305) des premières opérations d'autorisation vérifiant, pour chaque requête de résolution d'un nom de domaine authentifiée par l'unité d'authentification, si le dispositif client ayant émis ladite requête ou l'utilisateur dudit dispositif client a effectivement droit d'accès aux ressources dudit nom de domaine ; et
- une unité de résolution de noms de domaine (114) adaptée pour effectuer (S306) des opérations de résolution de nom de domaine grâce à un cache (116) dans lequel ledit équipement stocke des associations d'adresses IP et de noms de domaine respectifs,
ledit cache étant peuplé (S307) grâce à des résultats de résolutions de noms de domaine effectuées par des serveurs de noms externes (124a, 124b) correspondant chacun à un desdits domaines de sécurité, auxquels ledit équipement est destiné à être connecté via des tunnels sécurisés respectifs et auxquels ledit équipement fait appel, indépendamment desdits domaines de sécurité, lorsque ledit cache n'inclut pas de données permettant d'effectuer la résolution de nom de domaine requise.

2. Equipement selon la revendication 1, **caractérisé en ce que** l'unité d'interface client déclenche les opérations de résolution de nom de domaine en parallèle desdites premières opérations d'authentification et d'autorisation.

3. Equipement selon l'une quelconque des revendications 1 et 2, **caractérisé en ce que** l'unité d'interface client effectue un filtrage (S302) des requêtes de résolution de nom de domaine reçues en vérifiant que chaque requête contient effectivement, en données utiles, une information de nom de domaine formatée comme attendu par ledit équipement.

4. Equipement selon l'une quelconque des revendications 1 à 3, **caractérisé en ce que** l'unité d'interface client effectue un autre filtrage (S303) sur la base d'un historique d'usage des services dudit équipement par les dispositifs clients ayant respectivement émis lesdites requêtes de résolution de nom de domaine.

5. Equipement selon l'une quelconque des revendications 1 à 4, **caractérisé en ce que** l'unité d'authentification est en outre adaptée pour obtenir, dans chaque requête traitée par ladite unité d'authentification, des informations d'identification d'un utilisateur dont l'utilisation du dispositif client ayant émis ladite requête a entraîné l'émission de ladite requête, et **en ce que** lesdites premières opérations d'authentification vérifient en outre que lesdites informations d'identification correspondent à un utilisateur préalablement enregistré auprès dudit équipement ou du serveur d'authentification externe en association avec l'adresse IP dudit dispositif client.

6. Equipement selon l'une quelconque des revendications 1 à 5, **caractérisé en ce que** l'unité d'autorisation dispose localement d'un référentiel de données au sein duquel l'unité d'autorisation vérifie, pour chaque requête de résolution d'un nom de domaine authentifiée par l'unité d'authentification, si le dispositif client ayant émis ladite requête ou l'utilisateur dudit dispositif client a effectivement droit d'accès aux ressources dudit nom de domaine,
ledit référentiel de données étant peuplé grâce à des résultats d'autorisations effectuées par un serveur d'autorisation externe auquel ledit équipement est connecté et auquel ledit équipement fait appel lorsque ledit référentiel de données n'inclut pas de données permettant d'effectuer l'autorisation requise.

7. Equipement selon la revendication 6, **caractérisé en ce que** ledit référentiel de données définit, pour chaque utilisateur ou dispositif client préalablement enregistré, quels sont les noms de domaine dont les ressources sont accessibles audit utilisateur ou audit dispositif client.

8. Equipement selon l'une quelconque des revendications 1 à 7, **caractérisé en ce que** l'unité d'authentification dispose localement d'un référentiel de données contenant des données d'authentification de dispositifs clients préalablement enregistrés et au sein duquel l'unité d'authentification vérifie, pour chaque requête de résolution d'un nom de domaine, si le dispositif client ayant émis ladite requête ou un utilisateur dont l'utilisation dudit dispositif client a entraîné l'émission de ladite requête a effectivement été préalablement enregistré,
ledit référentiel de données étant peuplé grâce à des résultats d'authentifications effectuées par le serveur d'authentification externe et auquel ledit équipement fait appel lorsque ledit référentiel de données n'inclut pas de données permettant d'effectuer l'authentification requise.

9. Equipement selon l'une quelconque des revendications 1 à 8, **caractérisé en ce que** l'unité de résolution de noms de domaine est adaptée pour, lorsque l'unité de résolution de noms de domaine fait appel aux serveurs de noms externes, demander en parallèle la résolution de nom de domaine auxdits serveurs de noms externes, et **en ce que** la première réponse positive valide reçue est utilisée pour peupler (S307) ledit cache.

10. Equipement selon l'une quelconque des revendications 1 à 9, **caractérisé en ce que** ledit équipement est adapté pour, suite auxdites premières opérations d'authentification, déclarer le dispositif client ayant émis la requête de résolution de nom de domaine au sein du cache en y inscrivant l'adresse IP dudit dispositif client en association avec une autre représentation de ladite adresse IP sous une forme assimilable à un nom de domaine,
et **en ce que** l'équipement (110) est en outre adapté pour offrir des services de résolution inverse, et pour ce faire :
- l'unité d'interface client (111) est adaptée pour recevoir (S401) des requêtes de résolution inverse en provenance desdits dispositifs clients et pour répondre (S409) auxdites requêtes, chaque requête de résolution inverse incluant une adresse IP du dispositif client ayant émis ladite requête et une adresse IP à identifier ;
- l'unité d'authentification (112) est adaptée pour effectuer (S404) des secondes opérations d'authentification vérifiant, pour chaque requête de résolution inverse, au moins grâce à l'adresse IP du dispositif client ayant émis ladite requête, si ledit dispositif client ou un utilisateur dudit dispositif client a été préalablement enregistré auprès dudit équipement ou dudit serveur d'authentification externe ;
- l'unité d'autorisation (113) est adaptée pour effectuer (S405) des secondes opérations d'autorisation vérifiant, pour chaque requête de résolution inverse authentifiée par l'unité d'authentification, si le dispositif client ayant émis ladite requête ou l'utilisateur dudit dispositif client a effectivement droit d'accès aux ressources concernées par ladite résolution inverse ; et
- l'unité de résolution de noms de domaine (114) est adaptée pour effectuer (S406) des opérations de résolution inverse grâce au cache (116), en vérifiant si l'adresse IP à identifier est contenue dans ledit cache et en faisant appel aux serveurs de noms externes (124a, 124b), indépendamment desdits domaines de sécurité, lorsque ledit cache n'inclut pas de données permettant d'effectuer la résolution inverse requise.

11. Equipement selon la revendication 10, **caractérisé en ce que** l'unité d'interface client déclenche les opérations de résolution inverse en parallèle desdites secondes opérations d'authentification et d'autorisation.

12. Equipement selon l'une quelconque des revendications 10 et 11, **caractérisé en ce que** l'unité de résolution de noms de domaine est adaptée pour, lorsque l'unité de résolution de noms de domaine fait appel aux serveurs de noms externes, demander en parallèle la résolution inverse auxdits serveurs de noms externes, et **en ce que** la première réponse positive valide reçue est utilisée pour peupler (S407) ledit cache.

13. Equipement selon l'une quelconque des revendications 1 à 12, **caractérisé en ce que** ledit équipement est adapté pour, lorsque ledit équipement détecte (S601) la présence d'un dispositif client malicieux, fournir une adresse IP factice au dispositif client malicieux, en réponse à une requête de résolution de nom de domaine émise par ledit dispositif client malicieux.

14. Equipement selon l'une quelconque des revendications 1 à 13, **caractérisé en ce que** ledit équipement est adapté pour, lorsque ledit équipement détecte (S601) la présence d'un dispositif client malicieux, transmettre (S602) à un contrôleur SDN (500) une information indiquant que la présence d'un dispositif client malicieux a été détectée, ladite information incluant l'adresse IP dudit dispositif client malicieux, afin que le contrôleur SDN isole ledit dispositif client malicieux.

15. Equipement selon l'une quelconque des revendications 1 à 12, **caractérisé en ce que** ledit équipement est adapté pour, lorsqu'un dispositif client est authentifié et autorisé à recevoir le résultat d'une résolution de nom de domaine suite aux opérations d'authentification et d'autorisation, transmettre à un contrôleur SDN (500) une information indiquant que ledit dispositif client a obtenu l'autorisation de recevoir le résultat de la résolution de nom de domaine et qu'une adresse IP virtuelle est requise en remplacement de l'adresse IP qui correspond effectivement audit nom de domaine, afin que le contrôleur SDN attribue ladite adresse IP virtuelle et effectue un paramétrage de translation d'adresse auprès de routeurs de bordure du réseau de communication géré par le contrôleur SDN (500) pour que ladite adresse IP virtuelle soit associée à l'adresse IP qui correspond effectivement audit nom de domaine,
et **en ce que** ledit équipement est adapté pour fournir ladite adresse IP virtuelle audit dispositif client à la place de l'adresse IP qui correspond effectivement audit nom de domaine.

16. Equipement selon la revendication 15, **caractérisé en ce que** ledit équipement est adapté pour fournir des adresses IP virtuelles distinctes à des dispositifs clients distincts pour un même nom de domaine.

17. Equipement selon l'une quelconque des revendications 15 et 16, **caractérisé en ce que** ledit équipement comporte un cache complémentaire (116'), et **en ce que** ledit équipement est adapté pour stocker dans le cache complémentaire ladite adresse IP virtuelle en association avec l'adresse IP réelle associée audit nom de domaine, en correspondance avec l'adresse IP du dispositif client qui a émis la requête de résolution de nom de domaine qui a entraîné l'attribution de ladite adresse IP virtuelle, afin de répondre à une future requête de résolution inverse vis-à-vis de ladite adresse IP virtuelle en sollicitant le cache complémentaire pour obtenir l'adresse IP réelle correspondant à ladite adresse IP virtuelle, tout en vérifiant que c'est cette adresse IP virtuelle qui avait été communiquée au dispositif client ayant émis ladite future requête de résolution inverse.

18. Equipement selon la revendication 17, **caractérisé en ce que** ladite information transmise par ledit équipement (110) au contrôleur SDN (500) inclut également une durée, afin que le contrôleur SDN (500) effectue des opérations d'annulation, auprès des routeurs de bordure du réseau de communication, du paramétrage de translation d'adresse lorsque ladite durée a expiré, et ce que ledit équipement (110) est adapté pour supprimer du cache complémentaire les données relative à ladite adresse IP virtuelle lorsque ladite durée a expiré.

19. Procédé implémenté par un équipement (110) pour offrir des services de résolution de noms de domaine, ledit équipement étant connecté à un réseau de communication implémentant des domaines de sécurité, ledit équipement étant déclaré comme serveur de noms de domaine auprès de dispositifs clients (100) dans ledit réseau de communication,
ledit équipement recevant (S301) des requêtes de résolution de nom de domaine en provenance desdits dispositifs clients et répondant (S309) auxdites requêtes, chaque requête de résolution de nom de domaine incluant une adresse IP du dispositif client ayant émis ladite requête et un nom de domaine à résoudre ;
ledit équipement effectuant en outre les étapes suivantes :
- effectuer (S304) des opérations d'authentification vérifiant, pour chaque requête de résolution de nom de domaine, au moins grâce à l'adresse IP du dispositif client ayant émis ladite requête, si ledit dispositif client ou un utilisateur dudit dispositif client a été préalablement enregistré auprès dudit équipement ou d'un serveur d'authentification externe auquel ledit équipement est connecté ;
- effectuer (S305) des opérations d'autorisation vérifiant, pour chaque requête de résolution d'un nom de domaine authentifiée par l'unité d'authentification, si le dispositif client ayant émis ladite requête ou l'utilisateur dudit dispositif client a effectivement droit d'accès aux ressources dudit nom de domaine ;
- effectuer (S306) des opérations de résolution de nom de domaine grâce à un cache (116) dans lequel ledit équipement stocke des associations d'adresses IP et de noms de domaine respectifs,
ledit cache étant peuplé (S307) grâce à des résultats de résolutions de noms de domaine effectuées par des serveurs de noms externes (124a, 124b) correspondant chacun à un desdits domaines de sécurité, auxquels ledit équipement est connecté via des tunnels sécurisés respectifs et auxquels ledit équipement fait appel, indépendamment desdits domaines de sécurité, lorsque ledit cache n'inclut pas de données permettant d'effectuer la résolution de nom de domaine requise.

20. Produit programme d'ordinateur, **caractérisé en ce qu'**il comprend des instructions pour implémenter le procédé selon la revendication 19, lorsque ledit programme est exécuté par un processeur.

21. Moyens de stockage, **caractérisé en ce qu'**ils stockent un programme d'ordinateur comprenant des instructions pour implémenter le procédé selon la revendication 19, lorsque ledit programme est exécuté par un processeur.

## Patentansprüche

1. Vorrichtung (110), die dazu eingerichtet ist, Domain-Namen-Auflösungsdienste bereitzustellen, wobei die Vorrichtung dazu bestimmt ist, mit einem Kommunikationsnetzwerk verbunden zu werden, das Sicherheitsdomains einsetzt, wobei die Vorrichtung dazu bestimmt ist, in dem Kommunikationsnetzwerk bei Client-Einrichtungen (100) als Domain-Namen-Server deklariert zu werden,
wobei die Vorrichtung eine Client-Schnittstellen-Einheit (111) beinhaltet, die dazu eingerichtet ist, von den Client-Einrichtungen kommende Domain-Namen-Auflösungsanfragen zu empfangen (S301) und diese Anfragen zu beantworten (S309), wobei jede Domain-Namen-Auflösungsanfrage eine IP-Adresse der Client-Einrichtung, die die Anfrage gesendet hat, und einen aufzulösenden Domain-Namen beinhaltet;
wobei die Vorrichtung ferner beinhaltet:
- eine Authentifizierungseinheit (112), die dazu eingerichtet ist, erste Authentifizierungsvorgänge durchzuführen (S304), mit denen für jede Domain-Namen-Auflösungsanfrage zumindest dank der IP-Adresse der Client-Einrichtung, die die Anfrage gesendet hat, überprüft wird, ob die Client-Einrichtung oder ein Nutzer der Client-Einrichtung zuvor bei der Vorrichtung oder einem externen Authentifizierungsserver, mit dem die Vorrichtung verbunden ist, registriert worden ist;
- eine Autorisierungseinheit (113), die dazu eingerichtet ist, erste Autorisierungsvorgänge durchzuführen (S305), mit denen für jede von der Authentifizierungseinheit authentifizierte Domain-Namen-Auflösungsanfrage überprüft wird, ob die Client-Einrichtung, die die Anfrage gesendet hat, oder der Nutzer der Client-Einrichtung tatsächlich eine Zugriffsberechtigung auf die Ressourcen des Domain-Namens hat; und
- eine Domain-Namen-Auflösungseinheit (114), die dazu eingerichtet ist, Domain-Namen-Auflösungsvorgänge dank eines Pufferspeichers(116) durchzuführen (S306), in dem die Vorrichtung Assoziierungen von IP-Adressen und jeweiligen Domain-Namen speichert,
wobei der Pufferspeicher mit den Ergebnissen von Domain-Namen-Auflösungen befüllt wird (S307), die von externen Namensservern (124a, 124b) durchgeführt wurden, die jeweils einer der Sicherheitsdomains entsprechen, mit denen die Vorrichtung über jeweilige gesicherte Tunnel verbunden werden soll und die die Vorrichtung unabhängig von den Sicherheitsdomains hinzuzieht, wenn der Pufferspeicher keine Daten enthält, die es ermöglichen, die angefragte Domain-Namen-Auflösung durchzuführen.

2. Vorrichtung nach Anspruch 1, **dadurch gekennzeichnet, dass** die Client-Schnittstelleneinheit die Domain-Namen-Auflösungsvorgänge parallel zu den ersten Authentifizierungs- und Autorisierungsvorgängen auslöst.

3. Vorrichtung nach einem der Ansprüche 1 und 2, **dadurch gekennzeichnet, dass** die Client-Schnittstelleneinheit eine Filterung (S302) der empfangenen Domain-Namen-Auflösungsanfragen durchführt, bei der überprüft wird, dass jede Anfrage an Nutzdaten tatsächlich eine wie von der Vorrichtung erwartet formatierte Domain-Namen-Information enthält.

4. Vorrichtung nach einem der Ansprüche 1 bis 3, **dadurch gekennzeichnet, dass** die Client-Schnittstelleneinheit eine weitere Filterung (S303) auf der Grundlage einer Historie der Nutzung der Dienste der Vorrichtung durch die Client-Einrichtungen, die die Domain-Namen-Auflösungsanfragen gesendet haben, durchführt.

5. Vorrichtung nach einem der Ansprüche 1 bis 4, **dadurch gekennzeichnet, dass** die Authentifizierungseinheit ferner dazu eingerichtet ist, in jeder von der Authentifizierungseinheit bearbeiteten Anfrage Informationen zur Identifizierung eines Nutzers zu erhalten, dessen Nutzung der Client-Einrichtung, die die Anfrage gesendet hat, zum Senden der Anfrage geführt hat, und dadurch, dass die ersten Authentifizierungsvorgänge ferner überprüfen, dass die Identifizierungsinformationen einem Nutzer entsprechen, der zuvor bei der Vorrichtung oder dem externen Authentifizierungsserver in Verbindung mit der IP-Adresse der Client-Einrichtung registriert wurde.

6. Vorrichtung nach einem der Ansprüche 1 bis 5, **dadurch gekennzeichnet, dass** die Autorisierungseinheit lokal über einen Datenbestand verfügt, in dem die Autorisierungseinheit für jede Domain-Namen-Auflösungsanfrage, die von der Authentifizierungseinheit authentifiziert wurde, überprüft, ob die Client-Einrichtung, die die Anfrage gesendet hat, oder der Nutzer der Client-Einrichtung tatsächlich eine Zugriffsberechtigung auf die Ressourcen des Domain-Namens hat,
wobei der Datenbestand mit den Ergebnissen von Autorisierungen befüllt wird, die von einem externen Autorisierungsserver durchgeführt wurden, mit dem die Vorrichtung verbunden ist und den die Vorrichtung hinzuzieht, wenn der Datenbestand keine Daten enthält, die es ermöglichen, die angefragte Autorisierung durchzuführen.

7. Vorrichtung nach Anspruch 6, **dadurch gekennzeichnet, dass** der Datenbestand für jeden zuvor registrierten Nutzer oder jede zuvor registrierte Client-Einrichtung festlegt, welche die Domain-Namen sind, auf die der Nutzer oder die Client-Einrichtung zugreifen kann.

8. Vorrichtung nach einem der Ansprüche 1 bis 7, **dadurch gekennzeichnet, dass** die Authentifizierungseinheit lokal über einen Datenbestand verfügt, der Authentifizierungsdaten von zuvor registrierten Client-Vorrichtungen enthält und in dem die Authentifizierungseinheit für jede Domain-Namen-Auflösungsanfrage, überprüft, ob die Client-Einrichtung, die die Anfrage gesendet hat, oder ein Nutzer, dessen Nutzung der Client-Einrichtung zum Senden der Anfrage geführt hat, tatsächlich zuvor registriert worden ist,
wobei der Datenbestand mit den Ergebnissen von Authentifizierungen befüllt wird, die von dem externen Authentifizierungsserver durchgeführt wurden, den die Vorrichtung hinzuzieht, wenn der Datenbestand keine Daten enthält, die es ermöglichen, die angefragte Authentifizierung durchzuführen.

9. Vorrichtung nach einem der Ansprüche 1 bis 8, **dadurch gekennzeichnet, dass** die Domain-Namen-Auflösungseinheit dazu eingerichtet ist, wenn die Domain-Namen-Auflösungseinheit die externen Namensserver hinzuzieht, parallel die Domain-Namen-Auflösung bei den externen Namensservern anzufordern, und dadurch, dass die erste empfangene gültige positive Antwort verwendet dazu wird, den Pufferspeicher zu befüllen (S307).

10. Vorrichtung nach einem der Ansprüche 1 bis 9, **dadurch gekennzeichnet, dass** die Vorrichtung dazu eingerichtet ist, nach den ersten Authentifizierungsvorgängen die Client-Einrichtung, die die Domain-Namen-Auflösungsanfrage gesendet hat, im Pufferspeicher zu deklarieren, indem sie die IP-Adresse der Client-Einrichtung unter Assoziierung mit einer anderen Darstellung der IP-Adresse in einer einem Domain-Namen gleichzusetzenden Form darin einträgt,
und dadurch, dass die Vorrichtung (110) ferner dazu eingerichtet ist, inverse Auflösungsdienste bereitzustellen, und zu diesem Zweck:
- die Client-Schnittstelleneinheit (111) dazu eingerichtet ist, von den Client-Einrichtungen kommende inverse Auflösungsanfragen zu empfangen (S401) und diese Anfragen zu beantworten (S409), wobei jede inverse Auflösungsanfrage eine IP-Adresse der Client-Einrichtung, die die Anfrage gesendet hat, und eine zu identifizierende IP-Adresse beinhaltet;
- die Authentifizierungseinheit (112) dazu eingerichtet ist, zweite Authentifizierungsvorgänge durchzuführen (S404), mit denen für jede inverse Auflösungsanfrage zumindest dank der IP-Adresse der Client-Einrichtung, die die Anfrage gesendet hat, überprüft wird, ob die Client-Einrichtung oder ein Nutzer der Client-Einrichtung zuvor bei der Vorrichtung oder dem externen Authentifizierungsserver registriert worden ist;
- die Autorisierungseinheit (113) dazu eingerichtet ist, zweite Autorisierungsvorgänge durchzuführen (S405), mit denen für jede von der Authentifizierungseinheit authentifizierte inverse Auflösungsanfrage überprüft wird, ob die Client-Einrichtung, die die Anfrage gesendet hat, oder der Nutzer der Client-Einrichtung tatsächlich eine Zugriffsberechtigung auf die von der inversen Auflösung betroffenen Ressourcen hat; und
- die Domain-Namen-Auflösungseinheit (114) dazu eingerichtet ist, inverse Auflösungsvorgänge dank des Pufferspeichers (116) durchzuführen (S406), indem überprüft wird, ob die zu identifizierende IP-Adresse in dem Pufferspeicher enthalten ist, und indem externe Namensserver (124a, 124b) unabhängig von den Sicherheitsdomains hinzugezogen werden, wenn der Pufferspeicher keine Daten enthält, die es ermöglichen, die angefragte inverse Auflösung durchzuführen.

11. Vorrichtung nach Anspruch 10, **dadurch gekennzeichnet, dass** die Client-Schnittstelleneinheit die inversen Auflösungsvorgänge parallel zu den zweiten Authentifizierungs- und Autorisierungsvorgängen auslöst.

12. Vorrichtung nach einem der Ansprüche 10 und 11, **dadurch gekennzeichnet, dass** die Domain-Namen-Auflösungseinheit dazu eingerichtet ist, wenn die Domain-Namen-Auflösungseinheit die externen Namensserver hinzuzieht, parallel die inverse Auflösung bei den externen Namensservern anzufordern, und dadurch, dass die erste empfangene gültige positive Antwort dazu verwendet wird, den Pufferspeicher zu befüllen (S407).

13. Vorrichtung nach einem der Ansprüche 1 bis 12, **dadurch gekennzeichnet, dass** die Vorrichtung dazu eingerichtet ist, wenn die Vorrichtung die Anwesenheit einer böswilligen Client-Einrichtung (S601) erkennt, als Antwort auf eine Domain-Namen-Auflösungsanfrage, die von der böswilligen Client-Einrichtung gesendet wurde, eine Schein-IP-Adresse an die böswillige Client-Einrichtung auszugeben.

14. Vorrichtung nach einem der Ansprüche 1 bis 13, **dadurch gekennzeichnet, dass** die Vorrichtung dazu eingerichtet ist, wenn die Vorrichtung die Anwesenheit einer böswilligen Client-Einrichtung erkennt (S601), an einen SDN-Controller (500) eine Information zu übertragen (S602), die angibt, dass die Anwesenheit einer böswilligen Client-Einrichtung erkannt wurde, wobei die Information die IP-Adresse der böswilligen Client-Einrichtung beinhaltet, damit der SDN-Controller die böswillige Client-Einrichtung isoliert.

15. Vorrichtung nach einem der Ansprüche 1 bis 12, **dadurch gekennzeichnet, dass** die Vorrichtung dazu eingerichtet ist, wenn die Client-Einrichtung nach den Authentifizierungs- und Autorisierungsvorgängen authentifiziert ist und autorisiert ist, das Ergebnis einer Domain-Namen-Auflösung zu empfangen, an einen SDN-Controller (500) eine Information zu übertragen, die angibt, dass die Client-Einrichtung die Autorisierung erhalten hat, das Ergebnis der Domain-Namen-Auflösung zu empfangen, und dass eine virtuelle IP-Adresse als Ersatz für die IP-Adresse, die dem Domain-Namen tatsächlich entspricht, gefordert wird, damit der SDN-Controller die virtuelle IP-Adresse vergibt und eine Adressübersetzungsparametrierung bei Randroutern des vom SDN-Controller (500) verwalteten Kommunikationsnetzwerks durchführt, damit die virtuelle IP-Adresse mit der IP-Adresse assoziiert wird, die dem Domain-Namen tatsächlich entspricht,
und dadurch, dass die Vorrichtung dazu eingerichtet ist, anstelle der IP-Adresse, die dem Domain-Namen tatsächlich entspricht, die virtuelle IP-Adresse an die Client-Einrichtung auszugeben.

16. Vorrichtung nach Anspruch 15, **dadurch gekennzeichnet, dass** die Vorrichtung dazu eingerichtet ist, an verschiedene Client-Einrichtungen für denselben Domain-Namen verschiedene virtuelle IP-Adresse auszugeben.

17. Vorrichtung nach einem der Ansprüche 15 und 16, **dadurch gekennzeichnet, dass** die Vorrichtung einen zusätzlichen Pufferspeicher (116') umfasst und dass die Vorrichtung dazu eingerichtet ist, in dem zusätzlichen Pufferspeicher die virtuelle IP-Adresse unter Assoziierung mit der mit dem Domain-Namen assoziierten echten IP-Adresse in Verbindung mit der IP-Adresse der Client-Einrichtung, die die Domain-Namen-Auflösungsanfrage gesendet hat, die zur Vergabe der virtuellen IP-Adresse geführt hat, zu speichern, um eine zukünftige inverse Auflösungsanfrage bezüglich der virtuellen IP-Adresse zu beantworten, indem der zusätzliche Pufferspeicher in Anspruch genommen wird, um die der virtuellen IP-Adresse entsprechende echte IP-Adresse zu erhalten, und dabei zu überprüfen, dass es diese virtuelle IP-Adresse ist, die an die Client-Einrichtung übermittelt worden ist, die die zukünftige inverse Auflösungsanfrage gesendet hat.

18. Vorrichtung nach Anspruch 17, **dadurch gekennzeichnet, dass** die von der Vorrichtung (110) an den SDN-Controller (500) übertragene Information auch eine Dauer beinhaltet, damit der SDN-Controller (500) Vorgänge zur Annullierung der Adressübersetzungsparametrierung bei Randroutern des Kommunikationsnetzwerks durchführt, wenn die Dauer abgelaufen ist, und dadurch, dass die Vorrichtung (110) dazu eingerichtet ist, aus dem zusätzlichen Pufferspeicher die Daten zu der virtuellen IP-Adresse zu löschen, wenn die Dauer abgelaufen ist.

19. Verfahren, das von einer Vorrichtung (110) eingesetzt wird, um Domain-Namen-Auflösungsdienste bereitzustellen, wobei die Vorrichtung mit einem Kommunikationsnetzwerk verbunden ist, das Sicherheitsdomains einsetzt, wobei die Vorrichtung in dem Kommunikationsnetzwerk bei Client-Einrichtungen (100) als Domain-Namen-Server deklariert ist,
wobei die Vorrichtung von den Client-Einrichtungen kommende Domain-Namen-Auflösungsanfragen empfängt (S301) und diese Anfragen beantwortet (S309), wobei jede Domain-Namen-Auflösungsanfrage eine IP-Adresse der die Client-Einrichtung, die die Anfrage gesendet hat, und einen aufzulösenden Domain-Namen beinhaltet;
wobei die Vorrichtung ferner die folgenden Schritte durchführt:
- Durchführen (S304) der Authentifizierungsvorgänge, mit denen für jede Domain-Namen-Auflösungsanfrage zumindest dank der IP-Adresse der Client-Einrichtung, die die Anfrage gesendet hat, überprüft wird, ob die Client-Einrichtung oder ein Nutzer der Client-Einrichtung zuvor bei der Vorrichtung oder einem externen Authentifizierungsserver, mit dem die Vorrichtung verbunden ist, registriert worden ist;
- Durchführen (S305) der Autorisierungsvorgänge, mit denen für jede von der Authentifizierungseinheit authentifizierte Domain-Namen-Auflösungsanfrage überprüft wird, ob die Client-Einrichtung, die die Anfrage gesendet hat, oder der Nutzer der Client-Einrichtung tatsächlich eine Zugriffsberechtigung auf die Ressourcen des Domain-Namens hat;
- Durchführen (S306) der Domain-Namen-Auflösungsvorgänge dank eines Pufferspeicher (116), in dem die Vorrichtung Assoziierungen von IP-Adressen und jeweiligen Domain-Namen speichert,
wobei der Pufferspeicher mit den Ergebnissen von Domain-Namen-Auflösungen befüllt wird (S307), die von externen Namensservern (124a, 124b) durchgeführt wurden, von denen jeder einer der Sicherheitsdomains entspricht, mit denen die Vorrichtung über jeweilige gesicherte Tunnel verbunden ist und die die Vorrichtung unabhängig von den Sicherheitsdomains hinzuzieht, wenn der Pufferspeicher keine Daten enthält, die es ermöglichen, die angefragte Domain-Namen-Auflösung durchzuführen.

20. Computerprogrammprodukt, **dadurch gekennzeichnet, dass** es Befehle umfasst, die bei der Ausführung des Programms durch einen Prozessor das Verfahren nach Anspruch 19 ausführen.

21. Speichermedien, **dadurch gekennzeichnet, dass** sie ein Computerprogramm speichern, das Befehle umfasst, die bei der Ausführung des Programms durch einen Prozessor das Verfahren nach Anspruch 19 ausführen.

## Claims

1. Equipment (110) suitable for offering domain name resolution services, said equipment being intended to be connected to a communication network implementing security domains, said equipment being intended to be declared as domain name server to client devices (100) in said communication network,
said equipment including a client interface unit (111) suitable for receiving (S301) domain name resolution requests from said client devices and for responding (S309) to said requests, each domain name resolution request including an IP address of the client device having sent said request and a domain name to be resolved;
said equipment further including:
- an authentication unit (112) suitable for performing (S304) first authentication operations checking, for each domain name resolution request, at least using the IP address of the client device having sent said request, whether said client device or a user of said client device has been previously registered with said equipment or with an external authentication server to which said equipment is connected;
- an authorisation unit (113) suitable for performing (S305) first authorisation operations checking, for each resolution request for a domain name authenticated by the authentication unit, whether the client device having sent said request or the user of said client device effectively has right of access to the resources of said domain name; and
- a domain name resolution unit (114) suitable for performing (S306) domain name resolution operations using a cache (116) in which said equipment stores associations of IP addresses and of respective domain names,
said cache being populated (S307) using results of domain name resolutions performed by external name servers (124a, 124b) each corresponding to one of said security domains, to which said equipment is intended to be connected via respective secure tunnels and to which said equipment refers, independently of said security domains, when said cache does not include data making it possible to perform the requested domain name resolution.

2. Equipment according to Claim 1, **characterized in that** the client interface unit triggers the domain name resolution operations in parallel with said first authentication and authorisation operations.

3. Equipment according to either one of Claims 1 and 2, **characterized in that** the client interface unit performs a filtering (S302) of the received domain name resolution requests by checking that each request effectively contains, in useful data, an item of domain name information formatted as expected by said equipment.

4. Equipment according to any one of Claims 1 to 3, **characterized in that** the client interface unit performs another filtering (S303) on the basis of a history of use of the services of said equipment by the client devices having respectively sent said domain name resolution requests.

5. Equipment according to any one of Claims 1 to 4, **characterized in that** the authentication unit is further suitable for obtaining, in each request processed by said authentication unit, identification information of a user for whom the use of the client device having sent said request has led to the sending of said request, and **in that** said first authentication operations further check that said identification information corresponds to a user previously registered with said equipment or with the external authentication server in association with the IP address of said client device.

6. Equipment according to any one of Claims 1 to 5, **characterized in that** the authorisation unit locally has a reference database within which the authorisation unit checks, for each resolution request for a domain name authenticated by the authentication unit, whether the client device having sent said request or the user of said client device effectively has right of access to the resources of said domain name,
said reference database being populated using results of authorisations performed by an external authorisation server to which said equipment is connected and to which said equipment refers when said reference database does not include data making it possible to perform the requested authorisation.

7. Equipment according to Claim 6, **characterized in that** said reference database defines, for each user or client device previously registered, which are the domain names whose resources are accessible to said user or to said client device.

8. Equipment according to any one of Claims 1 to 7, **characterized in that** the authentication unit locally has a reference database containing authentication data of client devices previously registered and in which the authentication unit checks, for each resolution request for a domain name, whether the client device having sent said request or a user whose use of said client device has led to the sending of said request has effectively been previously registered,
said reference database being populated using results of authentications performed by the external authentication server and to which said equipment refers when said reference database does not include data making it possible to perform the requested authentication.

9. Equipment according to any one of Claims 1 to 8, **characterized in that** the domain name resolution unit is suitable for, when the domain name resolution unit refers to the external name servers, requesting in parallel the domain name resolution to said external name servers, and **in that** the first valid positive response received is used to populate (S307) said cache.

10. Equipment according to any one of Claims 1 to 9, **characterized in that** said equipment is suitable for, following said first authentication operations, declaring the client device having sent the domain name resolution request in the cache by inscribing therein the IP address of said client device in association with another representation of said IP address in a form comparable to a domain name,
and **in that** the equipment (110) is further suitable for offering reverse resolution services, and to do this:
- the client interface unit (111) is suitable for receiving (S401) reverse resolution requests from said client devices and for responding (S409) to said requests, each reverse resolution request including an IP address of the client device having sent said request and an IP address to be identified;
- the authentication unit (112) is suitable for performing (S404) second authentication operations checking, for each reverse resolution request, at least using the IP address of the client device having sent said request, whether said client device or a user of said client device has been previously registered with said equipment or with said external authentication server;
- the authorisation unit (113) is suitable for performing (S405) second authorisation operations checking, for each reverse resolution request authenticated by the authentication unit, whether the client device having sent said request or the user of said client device effectively has right of access to the resources affected by said reverse resolution; and
- the domain name resolution unit (114) is suitable for performing (S406) reverse resolution operations using the cache (116), by checking whether the IP address to be identified is contained in said cache and by referring to the external name servers (124a, 124b), independently of said security domains, when said cache does not include data making it possible to perform the requested reverse resolution.

11. Equipment according to Claim 10, **characterized in that** the client interface unit triggers the reverse resolution operations in parallel with said second authentication and authorisation operations.

12. Equipment according to either one of Claims 10 and 11, **characterized in that** the domain name resolution unit is suitable for, when the domain name resolution unit refers to the external name servers, requesting in parallel the reverse resolution to said external name servers, and **in that** the first valid positive response received is used to populate (S407) said cache.

13. Equipment according to any one of Claims 1 to 12, **characterized in that** said equipment is suitable for, when said equipment detects (S601) the presence of a malicious client device, providing a dummy IP address to the malicious client device, in response to a domain name resolution request sent by said malicious client device.

14. Equipment according to any one of Claims 1 to 13, **characterized in that** said equipment is suitable for, when said equipment detects (S601) the presence of a malicious client device, transmitting (S602) to an SDN controller (500) an item of information indicating that the presence of a malicious client device has been detected, said information item including the IP address of said malicious client device, in order for the SDN controller to isolate said malicious client device.

15. Equipment according to any one of Claims 1 to 12, **characterized in that** said equipment is suitable for, when a client device is authenticated and authorised to receive the result of a domain name resolution following the authentication and authorisation operations, transmitting to an SDN controller (500) an information item indicating that said client device has obtained the authorisation to receive the result of the domain name resolution and a virtual IP address is requested in replacement of the IP address which effectively corresponds to said domain name, in order for the SDN controller to assign said virtual IP address and perform an address translation parameterisation with edge routers of the communication network managed by the SDN controller (500) for said virtual IP address to be associated with the IP address which effectively corresponds to said domain name,
and **in that** said equipment is suitable for supplying said virtual IP address to said client device in place of the IP address which effectively corresponds to said domain name.

16. Equipment according to Claim 15, **characterized in that** said equipment is suitable for supplying distinct virtual IP addresses to distinct client devices for one and the same domain name.

17. Equipment according to either one of Claims 15 and 16, **characterized in that** said equipment comprises an additional cache (116'), and **in that** said equipment is suitable for storing in the additional cache said virtual IP address in association with the real IP address associated with said domain name, mapped with the IP address of the client device which has sent the domain name resolution request which has led to the assignment of said virtual IP address, in order to respond to a future reverse resolution request with respect to said virtual IP address by invoking the additional cache to obtain the real IP address corresponding to said virtual IP address, while checking that it is this virtual IP address which had been communicated to the client device having sent said future reverse resolution request.

18. Equipment according to Claim 17, **characterized in that** said information item transmitted by said equipment (110) to the SDN controller (500) also includes a duration, in order for the SDN controller (500) to perform operations of cancellation, with edge routers of the communication network, of the address translation parameterisation when said duration has expired, and **in that** said equipment (110) is suitable for deleting from the additional cache the data relating to said virtual IP address when said duration has expired.

19. Method implemented by equipment (110) for offering domain name resolution services, said equipment being connected to a communication network implementing security domains, said equipment being declared as domain name server to client devices (100) in said communication network,
said equipment receiving (S301) domain name resolution requests from said client devices and responding (S309) to said requests, each domain name resolution request including an IP address of the client device having sent said request and a domain name to be resolved;
said equipment further performing the following steps:
- performing (S304) authentication operations checking, for each domain name resolution request, at least using the IP address of the client device having sent said request, whether said client device or a user of said client device has been previously registered with said equipment or with an external authentication server to which said equipment is connected;
- performing (S305) authorisation operations checking, for each resolution request for a domain name authenticated by the authentication unit, whether the client device having sent said request or the user of said client device effectively has right of access to the resources of said domain name;
- performing (S306) domain name resolution operations using a cache (116) in which said equipment stores associations of IP addresses and of respective domain names,
said cache being populated (S307) using results of domain name resolutions performed by external name servers (124a, 124b) each corresponding to one of said security domains, to which said equipment is connected via respective secure tunnels and to which said equipment refers, independently of said security domains, when said cache does not include data making it possible to perform the requested domain name resolution.

20. Computer program product, **characterized in that** it comprises instructions for implementing the method according to Claim 19, when said program is run by a processor.

21. Storage means, **characterized in that** they store a computer program comprising instructions for implementing the method according to Claim 19, when said program is run by a processor.
